(19) **Europäisches Patentamt** **European Patent Office** **Office européen des brevets**

(11) **EP 4 518 225 A1**

(12) **EUROPEAN PATENT APPLICATION**
published in accordance with Art. 153(4) EPC

(43) Date of publication:
05.03.2025 Bulletin 2025/10

(21) Application number: 23796833.4

(22) Date of filing: 27.04.2023

(51) International Patent Classification (IPC):
*H04L 5/00* (2006.01)          *H04W 72/232* (2023.01)
*H04W 72/23* (2023.01)          *H04W 72/12* (2023.01)
*H04L 1/00* (2006.01)

(52) Cooperative Patent Classification (CPC):
H04L 1/00; H04L 5/00; H04W 72/12; H04W 72/23;
H04W 72/232

(86) International application number:
PCT/KR2023/005768

(87) International publication number:
WO 2023/211191 (02.11.2023 Gazette 2023/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.04.2022  KR 20220051986
08.05.2022  US 202263339509 P
10.08.2022  KR 20220100027
28.09.2022  KR 20220123708
17.11.2022  US 202263426294 P
16.02.2023  KR 20230021047

(71) Applicant: LG Electronics Inc.
Yeongdeungpo-gu
Seoul 07336 (KR)

(72) Inventors:
• YANG, Suckchel
Seoul 06772 (KR)
• CHOI, Seunghwan
Seoul 06772 (KR)
• KIM, Seonwook
Seoul 06772 (KR)

(74) Representative: Plasseraud IP
104 Rue de Richelieu
CS92104
75080 Paris Cedex 02 (FR)

(54) **METHOD AND DEVICE FOR TRANSMITTING AND RECEIVING SIGNAL IN WIRELESS COMMUNICATION SYSTEM**

(57) According to at least one of various embodiments, a terminal may monitor physical downlink control channel (PDCCH) candidates and detect downlink control information (DCI) through monitoring of the PDCCH candidates, wherein the DCI may support multi-cell scheduling on the basis of a plurality of cells configured in the terminal, and the DCI may include DCI fields commonly configured in co-scheduled cells.

**FIG. 13**

Monitor PDCCH candidates — 1305

Detect DCI — 1310

EP 4 518 225 A1

## Description

### TECHNICAL FIELD

The present disclosure relates to a wireless communication system, and more particularly, to a method and apparatus for transmitting or receiving a downlink/uplink radio signal in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### Technical Problem

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### Technical Solution

According to an aspect, a method of receiving a signal in a user equipment (UE) in a wireless communication system includes monitoring physical downlink control channel (PDCCH) candidates, and detecting downlink control information (DCI) through the monitoring of the PDCCH candidates. The DCI may support multi-cell scheduling based on a plurality of cells configured in the UE. The DCI may include a first DCI field commonly configured for co-scheduled cells. Based on that the plurality of serving cells include a first cell and a second cell, and that a size related configuration of the first DCI field is M-bit for scheduling of the first cell and N-bit for scheduling of the second cell, respectively: the size of the first DCI field commonly configured for the co-scheduled cells may be determined based on a lager one of the M-bit and the N-bit.

The first DCI field may include at least one of a field regarding antenna port information, a field regarding sounding reference signal (SRS) resource information, a field regarding information about precoding and number of layers, a field regarding beta offset information, an open-loop power control parameter set indication (OLPC) field, and a field regarding channel access and cyclic prefix (CP) information.

The first DCI field may indicate one code point common to the co-scheduled cells. A parameter mapped to the indicated one code point may be separately configured for each of the co-scheduled cells. A table providing parameters mapped to respective scheduled cells for each code point of the first DCI field may be configured in the UE.

The size of the first DCI field may be determined based on a cell having a maximum size related configuration of the first DCI field from among the plurality of cells.

The DCI may include a second DCI field applied for a reference cell from among the co-scheduled cells.

The reference cell may be a cell having the smallest serving cell index from among the co-scheduled cells.

The second DCI field may include a channel state information (CSI) request field.

The UE may obtain CSI related to the CSI request field based on channel state information-reference signal (CSI-RS) information for the reference cell having the smallest serving cell index from among the co-scheduled cells.

The UE may transmit a CSI report related to the CSI request field through a physical uplink shared channel (PUSCH) on the reference cell having the smallest serving cell index from among the co-scheduled cells.

According to another aspect, a processor-readable recording medium having recorded thereon a program for performing the method may be provided.

According to another aspect, a UE for performing the method may be provided.

According to another aspect, a device for controlling a UE for performing the method may be provided.

According to an aspect, a method of transmitting a signal by a base station (BS) in a wireless communication system includes generating downlink control information (DCI), and transmitting the DCI to the UE based on at least one of physical downlink control channel (PDCCH) candidates of a user equipment (UE). The DCI may support multi-cell scheduling based on a plurality of cells configured in the UE. The DCI may include a first DCI field that is commonly configured for co-scheduled cells. Based on that the plurality of cells including a first cell and a second cell and that a size related configuration of the first DCI field is M-bit for scheduling of the first cell and N-bit for scheduling of the second cell, the size of the first DCI field commonly configured for the co-scheduled cells may be determined through a larger one of the M-bit and the N-bit.

According to another aspect, a BS for performing the method may be provided.

**Advantageous Effects**

According to at least one of various embodiments wireless signal transmission/reception procedures may be performed efficiently.

It will be appreciated by persons skilled in the art that the technical effects that could be achieved with the present disclosure are not limited to what has been particularly described hereinabove and the above and other technical effects that the present disclosure could achieve will be more clearly understood from the following detailed description.

**BRIEF DESCRIPTION OF THE DRAWINGS**

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates exemplary mapping of physical channels in a slot.
FIG. 5 illustrates an exemplary PDCCH/PDSCH reception and acknowledgment/negative acknowledgment (ACK/-NACK) transmission process.
FIG. 6 illustrates an exemplary physical uplink shared channel (PUSCH) transmission process.
FIG. 7 illustrates an example of carrier aggregation.
FIG. 8 illustrates an exemplary wireless communication system supporting an unlicensed band.
FIG. 9 illustrates a method of occupying resources in an unlicensed band.
FIG. 10 is a diagram for explaining a specific type of field in multi-cell scheduling DCI according to an embodiment.
FIG. 11 is a diagram for explaining a CSI request field in multi-cell scheduling DCI according to an embodiment.
FIG. 12 is a diagram for explaining size configuration of a specific type of field in multi-cell scheduling DCI according to an embodiment.
FIG. 13 is a diagram for explaining a method of receiving a signal by a user equipment (UE) according to an embodiment.
FIG. 14 is a diagram for explaining a method of transmitting a signal by a base station (BS) according to an embodiment.
FIGS. 15 to 18 illustrate a communication system 1 and wireless devices applicable to the present disclosure.
FIG. 19 illustrates a discontinuous reception (DRX) operation applicable to the present disclosure.

**DETAILED DESCRIPTION**

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA may be implemented as a radio technology such as Universal Terrestrial Radio Access (UTRA) or CDMA2000. TDMA may be implemented as a radio technology such as Global System for Mobile communications (GSM)/General Packet Radio Service (GPRS)/Enhanced Data Rates for GSM Evolution (EDGE). OFDMA may be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration," and both may be used interchangeably. Further, a conditional expression (e.g., "if", "in a case", or "when") may be replaced by "based on that" or "in a state/status." In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent disclosure or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

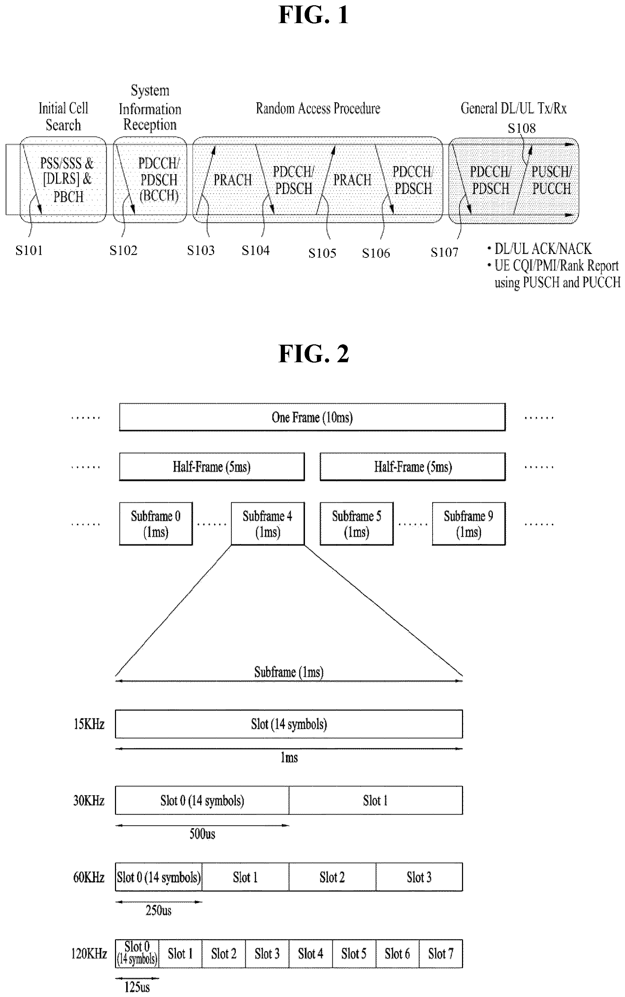

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

The purpose of the random access procedure (RACH procedure) is not limited to initial network access (e.g., S103 to S106). That is, the random access procedure may be used for various purposes. For example, the random access procedure may be used for at least one of an RRC connection re-establishment procedure, handover, UE-triggered UL data transmission, transition from RRC_INACTIVE, SCell time alignment, system information request, beam failure recovery, or UL resource request. However, the random access procedure is not limited thereto. The UE may acquire UL synchronization and/or UL transmission resources from the random access procedure.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS $(15*2^u)$ | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a slot <br> * $N^{frame,u}_{slot}$: Number of slots in a frame <br> * $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS $(15*2^u)$ | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

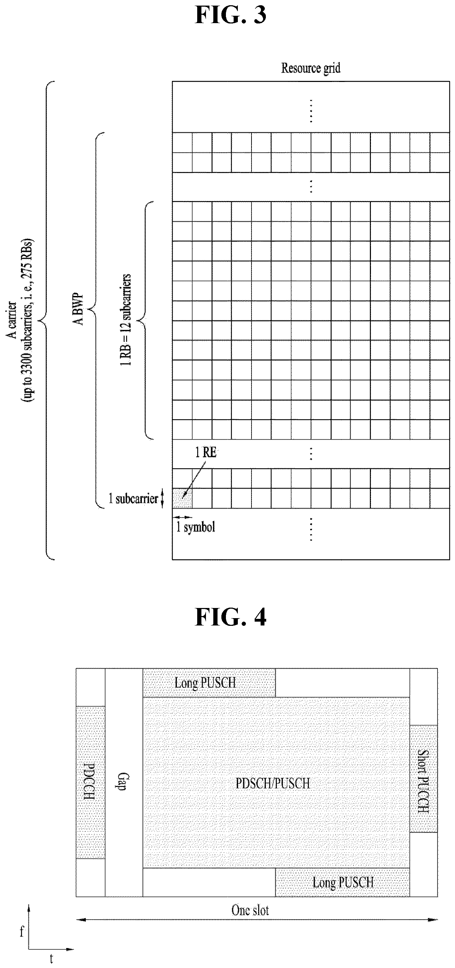

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured by higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters

- controlResourceSetId: A CORESET related to an SS
- monitoringSlotPeriodicityAndOffset: A PDCCH monitoring periodicity (in slots) and a PDCCH monitoring offset (in slots)
- monitoringSymbolsWithinSlot: PDCCH monitoring symbols in a slot (e.g., the first symbol(s) of a CORESET)
- nrofCandidates: The number of PDCCH candidates (one of 0, 1, 2, 3, 4, 5, 6, and 8) for each AL={1, 2, 4, 8, 16}

\* An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|------|-------------|------|----------|
| Type0-PDCCH | Common | SI-RNTI on a primary cell | SIB Decoding |
| Type0A-PDCCH | Common | SI-RNTI on a primary cell | SIB Decoding |
| Type 1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|------------|-------|
| 0_0 | Scheduling of PUSCH in one cell |

(continued)

| DCI format | Usage |
|---|---|
| 0_1 | Scheduling of one or multiple PUSCH in one cell, or indicating downlink feedback information for configured grant PUSCH (CG-DFI) |
| 0_2 | Scheduling of PUSCH in one cell |
| 1_0 | Scheduling of PDSCH in one cell |
| 1_1 | Scheduling of PDSCH in one cell, and/or triggering one shot HARQ-ACK codebook feedback |
| 1_2 | Scheduling of PDSCH in one cell |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

- SR (Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM symbols $N_{symb}^{PUCCH}$ | Number of bits | Usage | Etc |
|---|---|---|---|---|
| 0 | 1-2 | ≤2 | HARQ, SR | Sequence selection |
| 1 | 4-14 | ≤2 | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

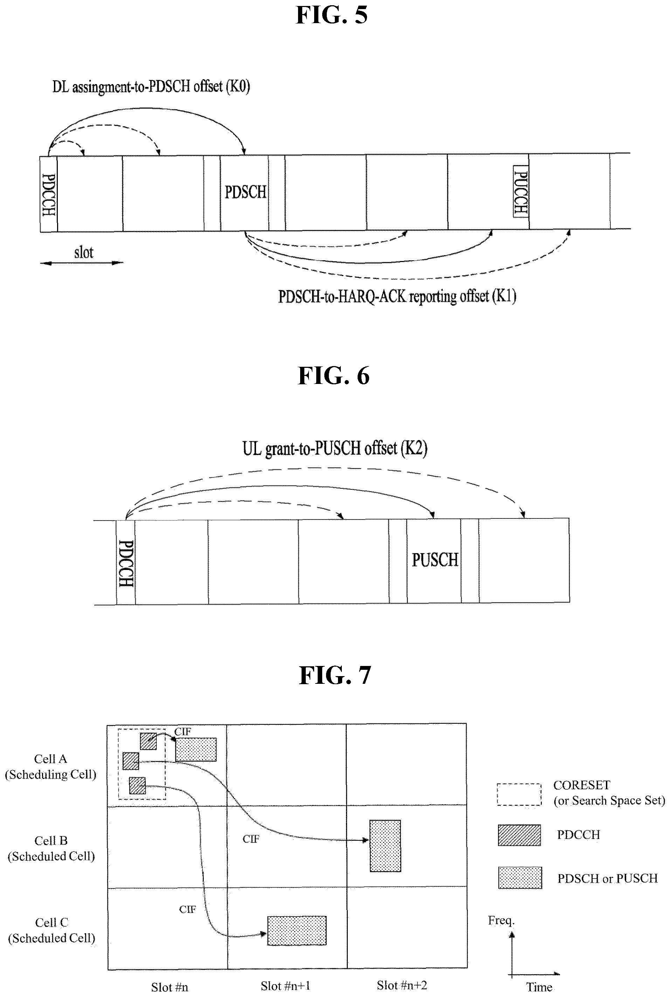

FIG. 5 illustrates an exemplary PDCCH/PDSCH reception and ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

- Frequency domain resource assignment: Indicates an RB set assigned to a PDSCH
- Time domain resource assignment: Indicates K0 and the starting position (e.g., OFDM symbol index) and length (e.g., the number of OFDM symbols) of the PDSCH in a slot.
- PDSCH-to-HARQ_feedback timing indicator: Indicates K1.
- HARQ process number (4 bits): Indicates the HARQ process ID of data (e.g., a PDSCH or TB).

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bitwise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information

- Frequency domain resource assignment: Indicates an RB set assigned to the PUSCH
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

Carrier aggregation

NR may support wider UL/DL bandwidths by aggregating multiple UL/DL carriers (i.e., carrier aggregation). It may be possible to transmit/receive signals in multiple carriers through carrier aggregation. When carrier aggregation is applied, each carrier (see FIG. A2) may be referred to as a component carrier (CC). CCs may be adjacent or non-adjacent in the frequency domain. A bandwidth of each CC may be determined independently. Asymmetric carrier aggregation in which the number of UL CCs and the number of DL CCs are different from each other may also be possible.

- Primary Cell (PCell): Cell operating on a primary frequency (e.g., primary component carrier (PCC) in which a UE performs an initial connection establishment procedure or initiates a connection re-establishment procedure in the case of a UE configured with carrier aggregation. Master cell group (MCG) cell operating in a primary frequency in which the UE performs an initial connection establishment procedure or initiates the connection re-establishment procedure.
- Secondary cell (SCell): Cell that provides additional radio resources in addition to a special cell in the case of a UE configured with carrier aggregation.
- Primary SCG cell (PSCell): Secondary cell group (SCG) cell in which a UE performs random access when performing RRC reconfiguration and synchronization processes in the case of DC.
- Special Cell (SpCell): In case of DC, the special cell represents a PCell of MCG or a PSCell of SCG. Otherwise (i.e. non-DC), the special cell represents a PCell.

- Serving Cell (ServCell): This represents a cell configured in a UE in an RRC_CONNECTED state. When CA/DA is not configured, there is only one serving cell (i.e., PCell). When CA/DA is configured, the serving cell represents a special cell(s) and a set of cells that includes all SCells.

Control information may be configured to be transmitted and received only through a specific cell. For example, UCI may be transmitted over a special cell (e.g., PCell). When a SCell (hereinafter, PUCCH-SCell) in which PUCCH transmission is allowed is configured, UCI may also be transmitted via PUCCH-SCell. As another example, a BS may allocate scheduling cells (set) to reduce PDCCH blinding decoding (BD) complexity at a UE side. For PDSCH reception/PUSCH transmission, the UE may perform PDCCH detection/decoding only in a scheduling cell. The BS may transmit PDCCH only through a scheduling cell (set). For example, a PDCCH for DL allocation may be transmitted in cell #0 (i.e., scheduling cell), and a corresponding PDSCH may be transmitted in cell #2 (i.e., scheduled cell) (Cross-carrier scheduling (CCS)). The scheduling cell (set) may be configured in a UE-specific, UE-group-specific or cell-specific manner. The scheduling cell include a special cell (e.g., PCell).

For cross-carrier scheduling, a carrier indicator field (CIF) is used. The CIF may be semi-statically disabled/enabled by UE-specific (or UE group-specific) higher layer (e.g. radio resource control (RRC)) signaling. The CIF field is an x-bit field (e.g., x=3) within the PDCCH (i.e., DCI) and may be used to indicate a (serving) cell index of the scheduled cell.

- CIF disabled: CIF is not present in the PDCCH. A PDCCH on a scheduling cell allocates PDSCH/PUSCH resources on the same cell. That is, the scheduling cell is identical to the scheduled cell.
- CIF enabled: CIF is present in the PDCCH. The PDCCH in the scheduling may allocate PDSCH/PUSCH resources on one of a plurality of cells by using the CIF. The scheduling cell may be the same as or different from the scheduled cell. The PDSCH/PUSCH means a PDSCH or a PUSCH.

FIG. 7 is a diagram for explaining carrier aggregation. In FIG. 7, it is assumed that three cells are aggregated. When the CIF is disabled, each cell may only transmit a PDCCH that schedule its own PDSCH/PUSCH (self-carrier scheduling (SCS)). On the other hand, when the CIF is enabled by UE-specific (or UE-group-specific or cell-specific) higher layer signaling and cell A is configured as a scheduling cell, cell A may transmit not only a PDCCH scheduling the PDSCH/PUSCH of cell A but also a PDCCH scheduling the PDSCH/PUSCH of other cells (i.e., scheduled cells) (cross-carrier scheduling (CCS)). In this case, a PDCCH scheduling its own cell is not transmitted in cell B/C.

NR-shared spectrum/unlicensed band (NR-U) operation

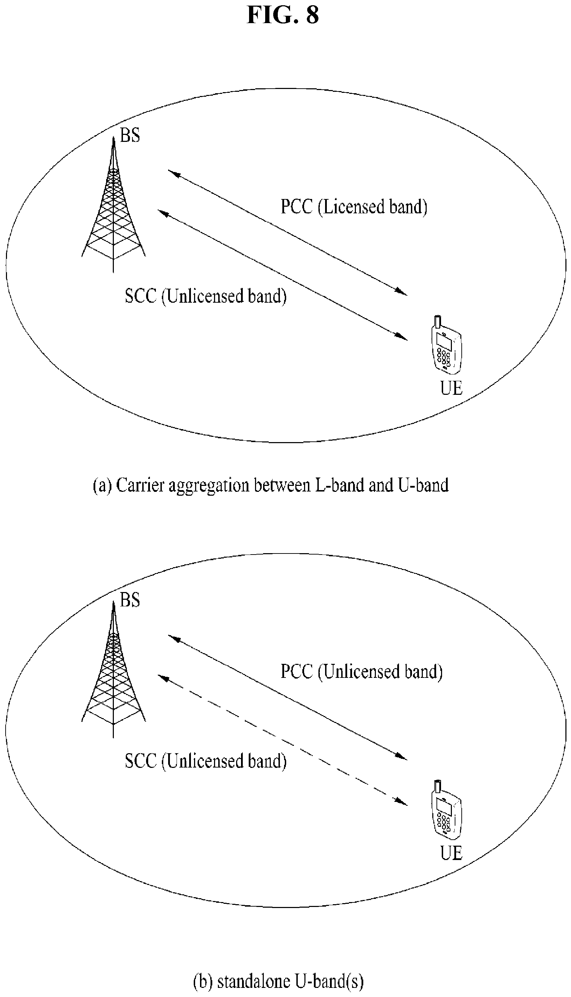

FIG. 8 illustrates a wireless communication system supporting an unlicensed band. For convenience, a cell operating in a licensed band (hereinafter, L-band) is defined as an LCell and a carrier of the LCell is defined as a (DL/UL) LCC. A cell operating in an unlicensed band (hereinafter, U-band) is defined as a UCell and a carrier of the UCell is defined as a (DL/UL) UCC. A carrier of a cell may represent an operating frequency (e.g., a center frequency) of the cell. A cell/carrier (e.g., CC) may generically be referred to as a cell.

When carrier aggregation is supported, one UE may transmit and receive signals to and from a BS in a plurality of aggregated cells/carriers. If a plurality of CCs is configured for one UE, one CC may be configured as a primary CC (PCC) and the other CCs may be configured as secondary CCs (SCCs). Specific control information/channels (e.g., a CSS PDCCH and PUCCH) may be configured to transmit and receive signals only in the PCC. Data may be transmitted and received in the PCC and/ or the SCCs. In FIG. 8(a), the UE and the BS transmit and receive signals in the LCC and the UCC (non-standalone (NSA) mode). In this case, the LCC may be configured as the PCC and the UCC may be configured as the SCC. If a plurality of LCCs is configured for the UE, one specific LCC may be configured as the PCC and the other LCCs may be configured as the SCCs. FIG. 8(a) corresponds to LAA of the 3GPP LTE system. FIG. 8(b) illustrates the case in which the UE and the BS transmit and receive signals in one or more UCCs without the LCC (SA mode). In this case, one of the UCCs may be configured as the PCC and the other UCCs may be configured as the SCCs. To this end, PUCCH, PUSCH, PRACH transmission may be supported. Both the NSA mode and the SA mode may be supported in an unlicensed band of the 3GPP NR system.

Unless otherwise mentioned, the definitions below are applicable to terms as used in the present disclosure

- Channel: A carrier or a part of a carrier including consecutive RBs in which a channel access procedure (CAP) is performed in a shared spectrum
- Channel access procedure (CAP): A procedure of evaluating the availability of a channel based on sensing to determine whether the channel is used by other communication node(s) before a signal transmission. A basic unit for sensing is a sensing slot with a duration Tsl of 9us. The sensing slot duration Tsl may be considered to be idle when a BS or a UE senses the channel during the sensing slot duration, and power detected for at least 4us within the sensing slot duration is less than an energy detection threshold XThresh. Otherwise, the sensing slot duration Tsl of 9us may be considered to be busy. A CAP may be referred to as listen-before-talk (LBT).

- Channel occupancy: Transmission(s) on channel(s) from a BS/UE after a CAP.
- Channel occupancy time (COT): A total time for which the BS/UE and any BS/UE(s) sharing the channel occupancy perform transmission(s) on the channel after the BS/UE corresponding CAPs. When a COT is determined, if a transmission gap is less than or equal to 25us, the gap duration may also be counted in the COT. The COT may be shared for transmission between the BS and corresponding UE(s).
- DL transmission burst: A set of transmissions from the BS without any gaps greater than 16us. Transmissions from the BS separated by a gap of more than 16us are considered as separate DL transmission bursts. The BS may perform transmission(s) after a gap within a DL transmission burst without sensing channel availability.
- UL transmission burst: A set of transmissions from the UE without any gaps greater than 16us. Transmissions from the UE separated by a gap of more than 16us are considered as separate UL transmission bursts. The UE may perform transmission(s) after a gap within a UL transmission burst without sensing channel availability.
- Discovery burst: A DL transmission burst including a set of signal(s) and/or channel(s) confined within a window and associated with a duty cycle. In the LTE-based system, a discovery burst may be transmission(s) initiated by a BS, including a primary synchronization signal (PSS), a secondary synchronization signal (SSS) and a cell-specific reference signal (CRS) and further including a non-zero power CSI-RS. In the NR-based system, a discovery burst may be transmission(s) initiated by a BS, including at least an SS/PBCH block and further including a CORESET for a PDCCH scheduling a PDSCH with SIB1, a PDSCH carrying SIB1, and/or non-zero power CS-RS.

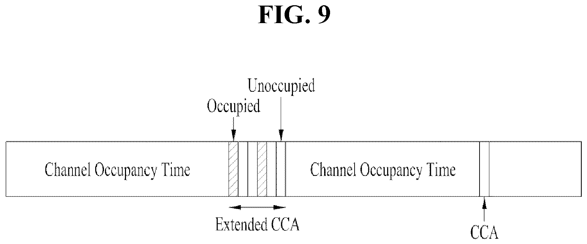

FIG. 9 illustrates a method of occupying resources in an unlicensed band. According to regional regulations concerning the unlicensed band, a communication node in the unlicensed band needs to determine, before signal transmission, whether other communication nodes use a channel. Specifically, the communication node may first perform carrier sensing (CS) before signal transmission to check whether other communication nodes transmit signals. If it is determined that other communication nodes do not transmit signals, this means that clear channel assessment (CCA) is confirmed. When there is a predefined CCA threshold or a CCA threshold configured by higher layer (e.g., RRC) signaling, if energy higher than the CCA threshold is detected in a channel, the communication node may determine that the channel is in a busy state and, otherwise, the communication node may determine that the channel is in an idle state. For reference, in Wi-Fi standard (802.11ac), the CCA threshold is set to -62dBm for a non-Wi-Fi signal and to -82dBm for a Wi-Fi signal. Upon determining that the channel is in an idle state, the communication node may start to transmit signals in the UCell. The above processes may be referred to as listen-before-talk (LBT) or a channel access procedure (CAP). LBT and CAP may be used interchangeably.

Table 6 illustrates exemplary CAPs supported in NR-U.

[Table 6]

|  | Type | Explanation |
|---|---|---|
| DL | Type 1 CAP | CAP with random back-off<br>- time duration spanned by the sensing slots that are sensed to be idle before a downlink transmission(s) is random |
| | Type 2 CAP - Type 2A, 2B, 2C | CAP without random back-off<br>- time duration spanned by sensing slots that are sensed to be idle before a downlink transmission(s) is deterministic |
| UL | Type 1 CAP | CAP with random back-off<br>- time duration spanned by the sensing slots that are sensed to be idle before a downlink transmission(s) is random |
| | Type 2 CAP - Type 2A, 2B, 2C | CAP without random back-off<br>- time duration spanned by sensing slots that are sensed to be idle before a downlink transmission(s) is deterministic |

## Multi-cell Scheduling DCI

NR supports a wide spectrum across various frequency ranges. The usability of a 5G Advanced spectrum is expected to increase through re-farming of frequency bands used in previous generations. In particular, for a low frequency band FR1, available spectrum blocks tend to be more segmented and distributed. For a FR2 band and some FR1 bands, the available spectrum may be widened, and thus multiple carriers/cells need to be operated within the bands. There is a need to improve throughput and coverage by using these distributed spectrum bands or wider bandwidth spectrum in a more power-efficient and flexible manner.

It is important to increase flexibility and spectrum/power efficiency when data is scheduled across a plurality of cells including intra-band cells and inter-band cells, but in the current 5G NR scheduling scheme, DCI may only perform scheduling of the PUSCH/PDSCH for a single cell. However, a need for simultaneous scheduling of a plurality of cells is expected to increase in the future due to spectrum expansion/change and the like. To reduce control overhead due to scheduling, it is advantageous to perform PUSCH/PDSCH scheduling of the plurality of cells through single DCI.

To reduce the DCI overhead required for PDSCH/PUSCH scheduling in a carrier aggregation (CA) situation in which a plurality of cells are configured in the future, a multi-cell scheduling method that simultaneously schedules multiple (serving) cells/CCs (PDSCH/PUSCH transmission therethrough) with single DCI in Rel-18 may be considered.

Accordingly, a method of configuring and interpreting each field within the corresponding DCI for design of a DCI structure for performing the multi-cell scheduling described above (multi-cell DCI structure). The part of this specification that mainly describes a multi-cell scheduling operation for PUSCH or PDSCH transmission may also be applied to an operation principle of the proposed method in the same way for multi-cell scheduling for PDSCH or PUSCH transmission, respectively. In this specification, a cell may mean an (active) BWP configured/indicated to the corresponding cell.

Hereinafter, multi-cell scheduling DCI may be referred to as multi-cell DCI or simply DCI, and may include at least one of DL grant DCI for scheduling a PDSCH and UL grant DCI for scheduling a PUSCH.

Hereinafter, a reference cell may be determined based on at least one of i) to viii) below, but is not limited thereto. i) a cell with the lowest (or highest) cell index (or within each cell subgroup described below) within a combination of cells (co-scheduled cell set or each cell subgroup) that are simultaneously scheduled through the same multi-cell DCI, ii) a cell with the earliest (or latest) indicated PDSCH/PUSCH transmission starting symbol time (a cell with the lowest (or highest) cell index from among the corresponding plurality of cells when there are a plurality of cells with the earliest (or latest) PDSCH/PUSCH starting symbol time), iii) a cell with the earliest (or latest) indicated PDSCH/PUSCH transmission ending symbol time from among a combination of simultaneously scheduled cells (a cell with the lowest (or highest) cell index from among the corresponding plurality of cells when there are a plurality of cells with the earliest (or latest) PDSCH/PUSCH ending symbol time), iv) a cell prespecified through a cell indicated by a CIF field value or RRC, v) a cell with the lowest (or highest) cell index within a schedulable cell set of all cells schedulable (i.e., schedulable cell set) via any multi-cell DCI, vi) a cell indicated by a CIF field value, vii) a cell to which multi-cell DCI is transmitted, and/or viii) a cell previously designated via RRC.

For a field to which a shared-reference-cell method, a shared-cell-common method, and a shared-state-extension method proposed in the present disclosure are applied, i) only one field may be configured within multi-cell DCI (i.e., commonly applied to all cells belonging to the co-scheduled cell set), ii) in a state in which all cells belonging to a co-scheduled cell set are grouped into one or more (multiple) cell subgroups, one (commonly applied) DCI field may be configured for each cell subgroup (separate/independent fields may be configured between cell subgroups), or iii) in a state in which all cells belonging to a schedulable cell set may be grouped into one or more (multiple) cell subgroups, one DCI field (commonly applied) may be configured for each cell subgroup (separate/independent fields may be configured between cell subgroups) (that is, shared-reference-cell/shared-cell-common/shared-state-extension method and the configuration/instruction method of fields/information based thereon may be applied to each cell subgroup). Each cell subgroup may be configured/set up by a specific cell or a specific plurality of cells belonging to the co-scheduled cell set or schedulable cell set (e.g., some or all of the cells belonging to the co-scheduled cell set or schedulable cell set).

In detail, the cell subgroup configuration (grouping) may be i) configured independently for each DCI field or ii) may be configured for each field group (including one or more DCI fields) (in this case, the same cell subgroup configuration is applied to DCI fields belonging to the same group). In addition, in the case of a cell subgroup configuration (grouping) i) cell subgroup may be configured/applied (at a cell level) regardless of the number of (candidate) BWPs configured for each cell (belonging to the schedulable cell set or co-scheduled cell set) and a combination of (active) BWPs for each cell (for example, in a state in which cells 1 and 2 are configured as one subgroup and cells 3 and 4 are configured as another subgroup for cells 1/2/3/4, the subgroup configuration is always applied regardless of a change in a combination of (active) BWPs for each cell), or ii) the cell subgroup is configured/ (independently) for each combination of (active) BWPs for each cell (belonging to the schedulable cell set or co-scheduled cell set) (for example, in the case in which the (active) BWPs of cells 1/2/3/4 are a specific combination, cells 1 and 2 are configured as one subgroup and cells 3 and 4 are configured as another subgroup, whereas when the (active) BWPs of 1/2/3/4 are another specific combination, it may be a structure in which cells 1, 2, and 3 are configured as one subgroup and only cell 4 is configured as another subgroup. In the case of a DCI field that is subject to the cell subgrouping configuration/application or is configured based on the cell subgrouping configuration, it may include at least some of the DCI fields below, but is not limited thereto.

- Frequency domain resource assignment (FDRA) field
- Time domain resource assignment (TDRA) field
- Modulation and coding scheme (MCS) field
- HARQ process number (HPN) field

- Antenna port(s) (AP) field
- Transmission configuration indication (TCI) field
- SRS resource indicator (SRI) field
- Precoding information and number of layers (TPMI) field
- DMRS sequence initialization (DMRS init) field
- PTRS-DMRS association (PTRS asso) field
- VRB-to-PRB mapping (RB mapping) field
- PRB bundling size indicator (PRB bundle) field
- Beta_offset indicator (beta offset) field (e.g., information about beta offset parameter used (for rate matching) to determine the number of modulation symbols (RE number))
- Frequency hopping flag (FH) field
- TPC command for scheduled PUSCH (TPC) field
- ChannelAccess-CPext-CAPC (for PUSCH) (LBT) field (e.g., information about channel access type and CP extension on shared spectrum, additionally Channel Access Priority Class (CAPC) information may be provided)
- Open-loop power control parameter set indication (OLPC) field

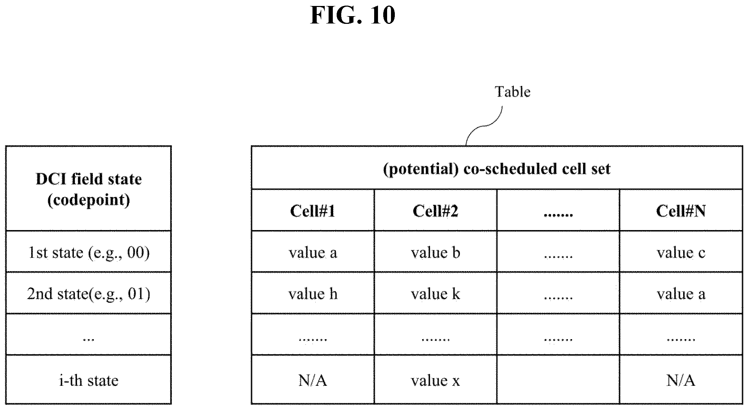

As a case in which the DCI field to which the shared-cell-common method proposed in this specification is applied is the existing (single-cell DCI-based scheduling), when one of the (multiple) states/indexes within the corresponding table is indicated in a state in which a table configured with one or more (multiple) states/indexes (including different parameter/value (combinations)) for each cell is preconfigured (defined or) by RRC or MAC-CE (e.g., in the case of the CSI request and/or the Beta_offset indicator and/or the ChannelAccess-CPext-CAPC (LBT) and/or the OLPC parameter set indication and/or the Invalid symbol pattern indicator and/or the TDRA field and/or the MCS field and/or the AP field and/or the TCI field and/or the SRI field and/or the TPMI field below), a specific state/index/codepoint indicated through the DCI field that is commonly configured to a cell set to which the shared-cell-common method is applied (e.g., the co-scheduled cell set or the cell subgroup) (Opt X) may be interpreted/applied (i.e., for each cell) as a parameter/value (combination) corresponding to the corresponding state/index/codepoint in a table configured for each cell belonging to a cell set, (Opt Y) a parameter/value (combination) corresponding to the state/codepoint/index in a table configured for a specific reference cell in the corresponding cell set may be commonly applied to cells belonging to the cell corresponding set (for example, in the case of ChannelAccess-CPext-CAPC (LBT)), or Opt Z) in a separate (common) table to be commonly applied to the corresponding cell set is preconfigured with RRC/MAC-CE in the same manner as above, a parameter/value (combination) corresponding to the corresponding state/codepoint/index in the common table may be commonly applied to cells belonging to the cell set (for example, in the case of ChannelAccess-CPext-CAPC (LBT)). For example, FIG. 10 is a diagram for explaining a case in which Opt X is applied to a DCI field to which the shared-cell-common method is applied. Referring to FIG. 10, it is assumed that a co-scheduled cell set may include at most N cells, and thus the actual number of cells co-scheduled through one multi-scheduling DCI may be N or less, and to this end, various combinations of co-scheduled cells of N or less may be configured. A value indicated by one state (codepoint) of the shared-cell-common DCI field may be configured independently for each cell. For example, assuming that a first state/codepoint (e.g., 00) is indicated, the first state/codepoint may mean value a for Cell#1, value b for Cell#2, and value c for Cell#N. Configurating values independently for respective cells includes, but is not limited to, a case in which different values are configured in different cells, and may not exclude a case in which the same value is configured for two or more cells. That is, it is sufficient if a value between cells is configured independently, and there may be no constraint that the independently configured values need to be identical or different. Some cells may not have a value configured for the corresponding state/codepoint. For example, for an i-th state/codepoint, Cell#2 may have value x, but Cell#1 and Cell/#N may not have values configured. Information (e.g., table) containing values of cells to be applied for interpretation of the shared-cell-common DCI field may be configured in the UE (for each cell). As described above, each of the Beta_offset indicator field, the ChannelAccess-CPext field, OLPC parameter set indication field, the antenna port (AP) field, the SRS resource indication (SRI) field, and/or the precoding and layer number information (TPMI) field may correspond to different Shared-cell-common DCI fields. For example, the Beta_offset indicator field may be a first shared-cell-common DCI field for which a first Table may be configured (for each cell), the ChannelAccess-CPext field may be a second shared-cell-common DCI field for which a second Table may be configured (for each cell), the OLPC parameter set indication field may be a third shared-cell-common DCI field for which a third Table may be configured (for each cell), the antenna port (AP) field may be a fourth shared-cell-common DCI field for which a fourth Table may be configured (for each cell), the SRS resource indication (SRI) field may be a fifth shared-cell-common DCI field for which a fifth Table may be configured (for each cell), and the precoding and layer number information (TPMI) field may be a sixth shared-cell-common DCI field for which a sixth Table may be configured (for each cell), but is not limited thereto.

A method of simultaneously indicating a combination of parameters/values to be applied to a plurality of cells by indicating a specific state/codepoint/index in the corresponding table through a DCI field based on a (multi-cell) joint table in which each state/codepoint/index (row) is configured with a combination of a plurality of parameters/values for the plurality of cells, for example, the shared-cell-common method or the shared-state-extension method may be applied to a specific field (for example, a CSI request and/or a Beta_offset indicator and/or a ChannelAccess-CPext-CAPC (LBT) and/or an OLPC parameter set indication and/or an Invalid symbol pattern indicator and/or a TDRA field and/or an MCS field and/or an AP field and/or a TCI field and/or an SRI field and/or a TPMI field) when the plurality of cells are scheduled through multi-cell DCI, and when only one cell is scheduled through multi-cell DCI, the state/codepoint/index indicated by the specific field may be interpreted/applied as a parameter/value (corresponding to the state/codepoint/index) within the (single-cell) table configured for single-cell DCI-based scheduling for the corresponding cell.

**[Common-T1A: Invalid state handling]**

First, a more specific example of the shared-cell-common method (specifically, the Opt X method) is presented as follows.

First, for a specific DCI field in the existing single-cell DCI-based scheduling, when one of the N states/codepoints/indexes is indicated through the DCI field in a state in which N (different) parameter/value (combinations) are preconfigured by RRC or MAC-CE for each of N states/codepoints/indexes to be indicated by the DCI field, the UE may perform PDSCH/PUSCH transmission/reception operations by applying the parameter/value (combination) configured to the indicated state/codepoint/index, and in this case, the size of the DCI field may be determined by ceil $\{log_2(N)\}$ bits, where N may be configured to a different (or the same) value for each cell.

For reference, in the present disclosure, ceil (X) means the smallest integer greater than or equal to X, and a value obtained by performing the modulo-B operation on A means the remainder when A is divided by B.

For a specific DCI field in multi-cell DCI-based scheduling, when a specific state/codepoint/index is indicated through the corresponding DCI field in a state in which the parameter/value (combination) for each state/codepoint/index (applicable to single-cell DCI-based scheduling) is preconfigured for each cell as described above, the UE may perform transmission/reception operations for the PDSCH/PUSCH scheduled for each cell by interpreting/applying the parameter/value (combination) configured for each cell for the indicated state/codepoint/index.

In multi-cell DCI-based scheduling, the size of the specific DCI field may be determined to (Alt A) ceil $\{log_2(N\_max)\}$ bits based on N_max, which is the maximum value (in this case, it may be a structure in which up to (initial) N_max states/codepoints/indexes are indicated through the DCI field), or (Alt B) ceil $\{log_2(N\_min)\}$ bits based on N_min, which is the minimum value (in this case, it may be a structure in which up to (initial) N_min states/codepoints/indexes are indicated through the DCI field), from among the N values configured for respective cells belonging to the corresponding cell set for the entire schedulable cell set (or each co-scheduled cell set).

**[Common-T2: Field size determination]**

An example of a method of determining a DCI field size when the separate method is applied is described below.

First, for a specific DCI field in the existing single-cell DCI, the size of the corresponding DCI field may be configured to L = ceil $\{log_2(N)\}$ bits (in a state in which N states/codepoints/indexes are to be indicated through the corresponding DCI field), where L may be configured to a different (or the same) value for each cell.

When the specific DCI field in the multi-cell DCI is configured based on the separate method, first, the sum L_sum of the L values configured for each of the cells belonging to the corresponding co-scheduled cell sets may be calculated for each of the plurality of (for example, N_co) co-scheduled cell sets configured in the entire schedulable cell set, and the maximum value of the N_co L_sum values calculated for each of the N_co co-scheduled cell sets may be determined as the size of the specific DCI field (configured in the multi-cell DCI).

**[Reference SC-DCI format for MC-DCI fields]**

When the shared-cell-common method (based on the Opt X method) and/or the separate method (and/or the shared-reference-cell method and/or the shared-state-extension method) are applied to a specific DCI field, if N states/codepoints/indexes to be indicated by the corresponding DCI field configured in the single-cell DCI for each cell (belonging to the schedulable cell set or the co-scheduled cell set) and the size L of the corresponding DCI field L = ceil $\{log_2(N)\}$ are referenced, it may be necessary to determine which single-cell DCI format (defined as a "reference DCI format" for convenience) to refer to the N states/codepoints/indexes and the corresponding field size L value.

In detail, for DL, when only one of DCI format 1_1 and DCI format 1_2 is configured for a specific cell, the configured corresponding DCI format may be determined/referenced as the reference DCI format, and when both DCI format 1_1 and DCI format 1_2 are configured, the BS may configure either (Opt 1) DCI format 1_2 to be determined/referenced as the reference DCI format, (Opt 2) DCI format 1_1 to be determined/referenced as the reference DCI format, or (Opt 3) which of the two is to be determined/referenced as the reference DCI format (when neither DCI format 1_1 nor DCI format 1_2 is configured, DCI format 1_0 may be determined/referenced as the reference DCI format.).

For UL, when only one of DCI format 0_1 and DCI format 0_2 is configured for a specific cell, the configured corresponding DCI format may be determined/referenced as the reference DCI format, and when both DCI format 0_1 and DCI format 0_2 are configured, the BS may configure either (Opt 1) DCI format 0_2 to be determined/referenced as the reference DCI format, (Opt 2) DCI format 0_1 to be determined/referenced as the reference DCI format, or (Opt 3) which of the two is to be determined/referenced as the reference DCI format (when neither DCI format 0_1 nor DCI format 0_2 is configured, DCI format 0_0 may be determined/referenced as the reference DCI format.).

**[Determination of entire MC-DCI payload size]**

The following method may be considered as a method of determining the total payload size of multi-cell DCI (format).

For each DCI field, when the shared-cell-common method (defined as the "Type-1A" field for convenience) (based on the Opt X method) and/or the separate method (defined as the "Type-2" field for convenience) and/or the shared-reference-cell method (defined as the "Type-1C" field for convenience) and/or the shared-state-extension method (defined as the "Type-1B" field for convenience) are applied, first, for each of the plurality of (for example, $N\_co$) co-scheduled cell sets configured in the entire schedulable cell set, the size sum $P\_sum$ of all Type-1A/1B/1C/2 fields required for scheduling for the corresponding co-scheduled cell set (cells belonging thereto) is calculated, and the maximum value from among the $N\_co$ $P\_sum$ values calculated for each of the $N\_co$ co-scheduled cell sets may be determined as the payload size of the multi-cell DCI (format).

**Configuring UL (or DL) DCI fields for multi-cell PUSCH (or PDSCH) scheduling**

Various methods (e.g., methods 1 to 7) described below for configuring DCI fields may be understood as types applied to each DCI field, and not all fields of multi-cell scheduling DCI are necessarily configured in a specific method. For example, in one multi-cell scheduling DCI, a first DCI field may be configured based on method X, and a second DCI field may be configured based on method Y. The classification of the methods below assumes the most detailed configuration form for convenience of explanation, and thus a single DCI field may be configured by a combination of different DCI field configuration methods within a non-conflicting range. For example, a single Type 1A DCI field may be configured through a combination of Method 3: Shared-cell-common and Method 4: Shared-state-extension, in which case interpretation/application of a single Type 1A DCI field common to all cells may be independent for each cell.

**1) DCI field configuration type**

A. Method 1: Shared-reference-cell

i. Only one field may be configured in the multi-cell DCI, and a value indicated by the corresponding DCI field may be applied only to a specific reference cell (e.g., a cell to which the DCI is transmitted, a cell with the lowest (or highest) cell index, or a cell indicated by the CIF field value) from among cells scheduled (operations according to indication of the DCI field are configured) through the multi-cell DCI, and a specific default value that is predefined/configured is applied to the remaining cells.

1. The reference cell may be determined as a cell with the earliest (or latest) PDSCH/PUSCH transmission starting symbol time on the corresponding cell (determined as a cell with the lowest (or highest) cell index from among the corresponding plurality of cells when there are a plurality of cells with the earliest (or latest) PDSCH/PUSCH starting symbol time) or may be determined as a cell with the earliest (or latest) PDSCH/PUSCH transmission ending symbol time on the corresponding cell (or determined as a cell with the lowest (or highest) cell index when there are a plurality of cells with the earliest (or latest) PDSCH/PUSCH ending symbol time.

B. Method 2: Shared-single-cell

i. Only when only (at most) one field is configured within a multi-cell DCI and one cell is scheduled (via the multi-cell DCI), the corresponding DCI field may be configured (a value indicated by the field is applied to the one cell), and when a plurality of cells are scheduled, the corresponding DCI field may not be configured and may be omitted (in this case, a specific default value that is predefined/configured is applied to the plurality of cells).

C. Method 3: Shared-cell-common

i. Only one field may be configured within the multi-cell DCI, and a value indicated by the DCI field may be applied commonly to all cells (scheduled through the multi-cell DCI).

D. Method 4: Shared-state-extension

i. Only one field may be configured within the multi-cell DCI, and each of the multiple states/codepoints to be indicated by the DCI field may be configured/set up as a combination of multiple pieces of information about a plurality of cells (not information about a single cell).

ii. As described above, the distinction between Method 4 and Method 3 is for convenience of explanation, and Method 4: shared-state-extension may also be understood as a specific form of Method 3: shared-cell-common.

E. Method 5: Separate

i. The number of fields (within the DCI) is configured as many as the number of cells scheduled through multi-cell DCI (for which an operation is configured according to indication of the corresponding DCI field), and each scheduled cell is assigned a separate field, such that a value indicated by the corresponding field is applied to the corresponding cell.

F. Method 6: Omit

i. Method in which the corresponding DCI field is not configured and omitted within the multi-cell DCI (in this case, a specific predefined/configured default value is applied to cells scheduled through the multi-cell DCI).

G. Method 7: This may be a method of configuring which method between Method 3 and Method 5 to apply for a specific DCI field.

i. Method of configuring (by the BS to the UE) which method from among Method 3 (shared-cell-common) and Method 5 (separate) to apply for each of the cell combinations to be simultaneously scheduled through the same multi-cell DCI for a specific DCI field (for each scheduled cell combination).

1. For example, when the scheduled cell combination #1 includes {cell #1, cell #2} and the scheduled cell combination #2 includes {cell #1, cell #3}, in the case of scheduled cell combination #1, it may be configured which method between method 3 and method 5 to apply to configure/indicate the specific field, and (independently) in the case of scheduled cell combination #2, it may be configured which method between method 3 and method 5 to apply to configure/indicate the specific field.

2. The specific DCI field may include at least one of the following.

- Frequency domain resource assignment (FDRA) field
- Time domain resource assignment (TDRA) field
- Modulation and coding scheme (MCS) field
- HARQ process number (HPN) field
- Antenna port(s) (AP) field
- Transmission configuration indication (TCI) field
- SRS resource indicator (SRI) field
- Precoding information and number of layers (TPMI) field
- DMRS sequence initialization (DMRS init) field
- PTRS-DMRS association (PTRS asso) field
- VRB-to-PRB mapping (RB mapping) field
- PRB bundling size indicator (PRB bundle) field

- Beta_offset indicator (beta offset) field
- Frequency hopping flag (FH) field
- TPC command for scheduled PUSCH (TPC) field
- Open-loop power control parameter set indication (OLPC) field

## 2) DCI field type signaling (Type 3 DCI field)

Which method to apply for a specific DCI field may be configured from among Method 1 or Method 2 or Method 3 or Method 4 (for convenience, these methods are defined as "Type-1x method") and Method 5 (for convenience, this method is defined as "Type-2 method").

A method may be provided for (the BS to the UE) to configure which method between the Type-1x method and the Type-2 method to apply for co-scheduled cells that are simultaneously scheduled through the same multi-cell DCI for a specific DCI field (this method is conveniently defined as the "Type-3 method").

When the Type-3 method is applied to a plurality of (e.g., N) DCI fields, the N DCI fields may be divided into a plurality of (e.g., K (< N)) field groups, and for each field group, the structure may configure which method between the Type-1x method and the Type-2 method to apply to all fields belonging to the field group.

Accordingly, all fields belonging to the same field group may be configured to apply only one method (for example, all to apply only Type-1x method or all to apply only Type-2 method), fields belonging to the same field group may not be configured to apply different methods, and fields in different field groups may be configured to apply the same method or different methods.

Therefore, when configuring the same (Type-1x or Type-2) method to be applied to all fields belonging to the field group as described above, the implementation complexity required for the UE (compared to configuration in a separate method for each field), for example, the number of cases requiring UE tests, may be reduced from approximately ($2^N$) to approximately $2^K$.

DCI fields to which the Type-3 method (based on the Type-1x/2 method setting of field group units) is applied may correspond to at least some (or all) of the following.

- HARQ process number (for convenience, referred to as HPN)
- MCS (for convenience, referred to as MCS)
- Bandwidth part indicator (for convenience, referred to as BWP)
- Frequency domain resource assignment (for convenience, referred to as FDRA)
- VRB-to-PRB mapping (for convenience, referred to as V2P)
- PRB bundling size indicator (for convenience, referred to as bund)
- Rate matching indicator (for convenience, referred to as RM)
- ZP CSI-RS trigger (for convenience, referred to as ZCR)
- Antenna port(s) (for convenience, referred to as AP)
- Transmission configuration indication (for convenience, referred to as TCI)
- DMRS sequence initialization (for convenience, referred to as DMRS)
- Frequency hopping flag (for convenience, referred to as FH)
- TPC command for scheduled PUSCH (for convenience, referred to as TPC)
- Precoding information and number of layers (for convenience, referred to as TPMI)
- PTRS-DMRS association (for convenience, referred to as PTRS)
- SRS request (for convenience, referred to as A-SRS)
- SRS resource indicator (for convenience, referred to as SRI)
- SRS offset indicator (for convenience, referred to as SOI)
- Open-loop power control parameter set indication (for convenience, referred to as OLPC)

For example, the MCS and AP and/or TCI and/or TPMI and/or SRI above may belong to the same field group.

For example, FDRA and V2P and/or bund above may belong to the same field group.

For example, V2P and bund above may belong to the same field group.

For example, RM and ZCR above may belong to the same field group.

For example, the AP and TCI and/or TPMI and/or SRI above may belong to the same field group.

For example, DMRS and PTRS above may belong to the same field group.

For example, TPC and OLPC above may belong to the same field group.

For example, A-SRS and SOI above may belong to the same field group.

### 3) Examples of application of methods by DCI field

A. UL/SUL indicator

i. Opt 1: Example of applying the shared-reference-cell method

1. A value (UL index) indicated by the DCI field may be applied only to a specific reference cell (from among cells scheduled via multi-cell DCI) for which the SUL carrier is configured via the parameter supplementaryUplink, and for the remaining cells, the currently operating UL carrier may be maintained without UL carrier switching.

ii. Opt 2: Example of applying the shared-single-cell method

1. The corresponding DCI field may be configured only when one cell is scheduled (via multi-cell DCI) (or only when one cell configured with SUL carrier is scheduled) (and a value indicated thereby (UL index) may be applied to the corresponding cell), and when a plurality of cells are scheduled (or when the plurality of cells are scheduled or one cell configured without SUL carrier is scheduled), the corresponding DCI field may not be configured and may be omitted (in this case, the currently operating UL carrier may be maintained without UL carrier switching for the corresponding (plurality of) cells).

iii. Opt 3: Example of applying the omit method

1. The corresponding DCI field may not be configured and may be omitted within the multi-cell DCI (in this case, the currently operating UL carrier may be maintained without UL carrier switching for the cell scheduled through the multi-cell DCI).

B. Frequency hopping (FH) flag

i. Opt 1: Example of applying the shared-cell-common method

1. A value (whether FH is applied or not) indicated by the corresponding DCI field may be commonly applied to the PUSCH on all cells (scheduled through multi-cell DCI), and all of the cells may be all cells configured with FH flag (from among the cells scheduled through multi-cell DCI).

ii. Opt 2: Example of applying the shared-reference-cell method

1. A value indicated by the DCI field (whether FH is applied or not) may be applied only to the PUSCH on a specific reference cell (from among cells scheduled through multi-cell DCI) configured with an FH flag, and assuming that the FH is not applied to the PUSCH on the remaining cells, the PUSCH may be transmitted (without the FH).

iii. Opt 3: Example of applying the shared-single-cell method

1. The corresponding DCI field may be configured only when one cell is scheduled (via multi-cell DCI) (or only when one cell configured with the FH flag is scheduled) (and a value indicated thereby (whether the FH is applied or not) may be applied to the PUSCH on the corresponding cell), and when a plurality of cells are scheduled (or when the plurality of cells are scheduled or one cell configured without the FH flag is scheduled), the corresponding DCI field may not be configured and may be omitted (in this case, assuming that the FH is not applied to the PUSCH on the plurality of cells, the PUSCH is transmitted (without FH).

iv. Opt 4: Example of applying the omit method

1. The corresponding DCI field may not be configured in the multi-cell DCI and may be omitted (in this case, the PUSCH may be transmitted (without FH) assuming that the FH is not applied to the PUSCH on the cell scheduled through the multi-cell DCI).

v. Note 0: In this case, the specific reference cell may be determined as one specific cell from among cells configured with the FH flag (within the existing single-cell (scheduling) DCI).

vi. Note 1: In this case, for cell A configured with the FH flag/indicator and cell B that is not configured with FH flag/indicator (within the existing single-cell (scheduling) DCI), it may be configured/restricted such that only cells A or only cell B belong to the same cell subgroup (i.e., such that cell A and cell B do not belong together), and in this state, the shared-reference-cell or the shared-cell-common method may be separately applied to each cell subgroup.

vii. Note 2: As another method, cell A and cell B may be configured to belong to the same cell subgroup, and in this state, the shared-reference-cell or the shared-cell-common method may be separately applied to each cell subgroup.

1. When the shared-cell-common method is applied to a cell subgroup to which cell A and cell B belong above, a) assuming that the indicator field configuration is omitted and the FH is not always applied for the cell subgroup, the PUSCH may be transmitted (without FH), b) considering/assuming that there is no scheduling for cell B when the indicator field is configured for the cell subgroup and FH application is indicated through the corresponding field, or c) assuming that the indicator field is configured for the cell subgroup and the FH is not always applied for cell B, the PUSCH may be transmitted (without FH).

2. The cell subgroup may be considered/applied as a co-scheduled cell set (all cells belonging to the corresponding set).

C. Downlink assignment index (DAI)

i. Opt 1: Example of applying the shared-cell-common method

A value (DAI value) indicated by the corresponding DCI field may be commonly applied to the PUSCH on all cells (scheduled via multi-cell DCI).

ii. Opt 2: Example of applying the shared-reference-cell method

A value (DAI value) indicated by the corresponding DCI field may be applied only to the PUSCH on a specific reference cell (from among cells scheduled via multi-cell DCI), a specific DAI value (e.g. 4) may be assumed for the PUSCHs on the remaining cells, or cells may operate assuming that there is no indicated/corresponding DAI (in this case, the HARQ-ACK payload to be multiplexed on the corresponding PUSCH is configured based on the counter/total-DAI indicated/received via DL DCI) (similarly to configured grant-based PUSCH).

The PUSCH on the reference cell may be determined as Alt 1) the PUSCH on the cell with the lowest cell index (from among cells scheduled with the same multi-cell DCI), Alt 2) the PUSCH having the earliest transmission starting symbol time (the PUSCH on the cell with the lowest cell index from among the multiple PUSCHs when there are multiple PUSCHs having the earliest starting symbol time), or Alt 3) the PUSCH selected to multiplex HARQ-ACK.

iii. Opt 3: Example of applying the shared-single-cell method

Only when one cell is scheduled (via multi-cell DCI), the corresponding DCI field may be configured (a value (DAI value) indicated therethrough is applied to the PUSCH on the corresponding cell), and when a plurality of cells are scheduled, the corresponding DCI field may not be configured and may be omitted (in this case, a specific DAI value (e.g. 4) is assumed for the PUSCH on the plurality of cells, or cells may operate assuming that there is no indicated/corresponding DAI (in this case, the HARQ-ACK payload to be multiplexed on the corresponding PUSCH is configured based on the counter/total-DAI indicated/received through DL DCI).

iv. Opt 4: Example of applying the omit method

In the multi-cell DCI, the corresponding DCI field may be omitted and not configured (in this case, a specific DAI value (e.g. 4) is assumed for the PUSCH on the cell scheduled through the multi-cell DCI, or it may be assumed that there is no indicated/corresponding DAI (in this case, the HARQ-ACK payload multiplexed on the corresponding PUSCH is configured based on the counter/total-DAI indicated/received through the DL DCI).

D. TPC command for scheduled PUSCH

i. Opt 1: Example of applying the shared-cell-common method

A value (TPC value) indicated by the corresponding DCI field may be commonly applied to the PUSCH on all cells (scheduled via multi-cell DCI).

ii. Opt 2: Example of applying the shared-reference-cell method

A value (TPC value) indicated by the DCI field may be applied only to the PUSCH on a specific reference cell (from among cells scheduled through multi-cell DCI), and assuming that there is no TPC value indication for the PUSCH on the remaining cells, the PUSCH may be transmitted.

iii. Opt 3: Example of applying the shared-single-cell method

Only when one cell is scheduled (via multi-cell DCI), the corresponding DCI field may be configured (a value (TPC value) indicated therethrough is applied to the PUSCH on the corresponding cell), and when a plurality of cells are scheduled, the corresponding DCI field may not be configured and may be omitted (in this case, the PUSCH is transmitted assuming that there is no TPC value indication for the PUSCH on the plurality of cells).

iv. Opt 4: Example of applying the omit method

The corresponding DCI field may not be configured in the multi-cell DCI and may be omitted (in this case, the PUSCH may be transmitted assuming that there is no TPC value indication for the PUSCH on the cell scheduled through the multi-cell DCI).

v. Opt 5: Example of applying the separate method

For each of the plurality of cells scheduled via multi-cell DCI, a TPC field/information may be separately configured/indicated, and in this case, the TPC field for each cell may be configured with 1 bit and may indicate one of values of 0 dB and X dB (e.g. X = 1 or X = 3 or X = -1) or one of values of X dB and -X dB (e.g. X = 1 or X = 4).
When only one cell is scheduled through multi-cell DCI, the TPC field for the corresponding cell is configured with 2 bits as before, and one of the four predefined values may be indicated through the corresponding field.

vi. Note: As another method of Opt 1 above, the shared-cell common method may be applied to cell(s) configured to an accumulation TPC mode in which TPC values received up to the present point in time are accumulated and applied and to cell(s) configured to an absolute TPC mode in which only TPC values received at the present point in time without accumulation are instantaneously applied, and accordingly, a value indicated by a single TPC field corresponding to cell(s) in the accumulation TPC mode may be commonly applied only to the corresponding cell(s), and a value indicated by a single TPC field corresponding to cell(s) in the absolute TPC mode may be commonly applied only to the corresponding cell(s).
vii. Note A: In this case, the shared-reference-cell or the shared-cell-common method may be applied separately to each cell subgroup.

1. Here, each cell subgroup may be composed only of cell(s) configured to the accumulation TPC mode or only of cell(s) configured to the absolute TPC mode, and cells configured to the accumulation TPC mode and cells configured to the absolute TPC mode may be configured such that the cells do not belong to the same cell subgroup.
2. When the shared-cell-common method is applied to each cell subgroup above, a TPC field/information may be separately configured/indicated for each cell subgroup scheduled through multi-cell DCI, and in this case, the TPC field for each cell subgroup may be configured with 1 bit, and one of the values of 0 dB and X dB (e.g. X = 1 or X = 3 or X = -1) may be indicated through the field, or one of the values of X dB and -X dB (e.g. X = 1 or X = 4) may be indicated (the indicated value is commonly applied to a plurality of cells belonging to the cell subgroup).

a. When only one cell is scheduled through multi-cell DCI, the TPC field for the corresponding cell is configured with 2 bits as before, and one of the four predefined values may be indicated through the corresponding field.

E. CSI request

i. Opt 1: Example of applying the shared-reference-cell method

A CSI report indicated by the DCI field may be applied only to the PUSCH on a specific reference cell (from among cells scheduled through multi-cell DCI), and assuming that there is no CSI reporting indication for the PUSCH on the remaining cells, the PUSCH may be transmitted.

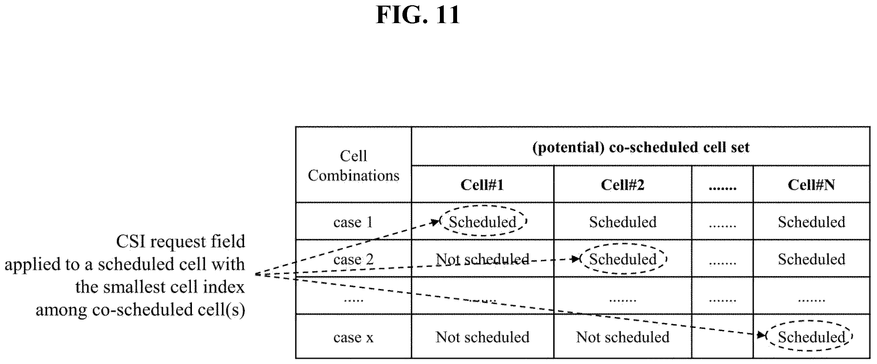

A. The PUSCH on the reference cell may be determined as Alt 1) the PUSCH on the cell with the lowest (or highest) cell index (from among cells scheduled with the same multi-cell DCI), or Alt 2) the PUSCH having the earliest (or latest) transmission starting symbol time (the PUSCH on the cell with the lowest (or highest) cell index from among the multiple PUSCHs when there are multiple PUSCHs having the earliest (or latest) starting symbol time). For example, FIG. 11 illustrates an example of a CSI request field to which Alt 1) is applied. In FIG. 11, the UE may receive multi-cell scheduling DCI through the PDCCH. Multi-cell scheduling DCI may be in UL grant DCI format. Multi-cell scheduling DCI allows UL transmissions (e.g., PUSCH) to be co-scheduled for one or more cells in a co-scheduled cell set. The multi-cell scheduling DCI may include a CSI request field. When a CSI report is requested through the CSI request field, the UE may transmit the CSI report through the PUSCH on the reference cell. For example, when X < Y, when the co-scheduled cell set corresponds to case 1 assuming that a cell index of Cell#X < a cell index of Cell#Y, the UE may transmit the CSI report through the PUSCH on Cell#1 having the smallest cell index. In case 2, the UE may transmit the CSI report through the PUSCH on Cell#2 with the smallest cell index. In case x, the UE may transmit the CSI report through the PUSCH on Cell#N with the smallest cell index.

ii. Opt 2: Apply the shared-single-cell method

Only when one cell is scheduled (via multi-cell DCI), the corresponding DCI field may be configured (a CSI report indicated therethrough is transmitted through the PUSCH on the corresponding cell), and when a plurality of cells are scheduled, the corresponding DCI field may not be configured and may be omitted (in this case, the PUSCH is transmitted assuming that there is no CSI reporting indication for the PUSCH on the plurality of cells).

iii. Opt 3: Apply the omit method

The corresponding DCI field may not be configured in the multi-cell DCI and may be omitted (in this case, the PUSCH may be transmitted assuming that there is no TPC value for the PUSCH on the cell scheduled through the multi-cell DCI).

iv. Note: When the Opt 1 (shared-reference-cell) method is applied, if a specific CSI reporting set/state/codepoint is indicated through the CSI request field in the multi-cell DCI, the UE may operate to transmit a CSI report (based on reception and measurement) for CSI-RS transmission(s) corresponding to the corresponding CSI reporting set/state/-codepoint configured for the specific reference cell through the PUSCH on the specific reference cell. For example, in FIG. 11, if X < Y, when the co-scheduled cell set corresponds to case 1 assuming that a cell index of Cell#X < a cell index of Cell#Y, the UE may measure/report CSI based on the CSI-RS corresponding to the corresponding CSI reporting set/state/codepoint configured on Cell#1 having the smallest cell index. In case 2, the UE may measure/report CSI based on the CSI-RS corresponding to the CSI reporting set/state/codepoint configured on Cell#2 having the smallest cell index. In case x, the UE may measure/report CSI based on the CSI-RS corresponding to the CSI reporting set/state/-codepoint configured on Cell#N having the smallest cell index.

v. Note A: In this case, the specific reference cell may be determined as one specific cell from among cells configured with the CSI request/indicator (within the existing single-cell (scheduling) DCI). For example, the reference cell may be determined as the smallest indexed cell with a CSI request/indicator set within a co-scheduled cell set.

vi. Note B: In this case, for cell A configured with the CSI request/indicator and cell B that is not configured with FH flag/indicator (within the existing single-cell (scheduling) DCI), it may be configured/restricted such that only cells A or only cell B belong to the same cell subgroup (i.e., such that cell A and cell B do not belong together), and in this state, the shared-reference-cell or the shared-cell-common method may be separately applied to each cell subgroup.

vii. Note C: As another method, cells A and B may be configured to belong to the same cell subgroup, and in this state, the shared-reference-cell or the shared-cell-common method may be applied separately to each cell subgroup.

1. When the shared-cell-common method is applied to a cell subgroup to which cell A and cell B belong above, a) assuming that the indicator field configuration is omitted and there is always no CSI reporting indication for the cell subgroup, the PUSCH may be transmitted, b) considering/assuming that there is no scheduling for cell B when the indicator field is configured for the cell subgroup and (at least one) bit '1' is indicated through the corresponding field, or c) assuming that the indicator field is configured for the cell subgroup and there is always no CSI reporting indication for cell B, the PUSCH may be transmitted.

2. The cell subgroup may be considered/applied as a co-scheduled cell set (all cells belonging to the corresponding set).

viii. Note D: Additionally, cell X in which a CSI request/indicator field is configured as a specific X-bit size and cell Y in which the CSI request/indicator field is configured as a larger Y-bit size than the X-bit size (within the existing single-cell (scheduling) DCI) may be configured to belong to the same cell subgroup, and in this state, the shared-reference-cell or the shared-cell-common method may be separately applied to each cell subgroup.

1. When the shared-cell-common method is applied to a cell subgroup to which cell X and cell Y belong together, a) for the cell subgroup, the indicator field may be configured with a smaller size of X-bit and for cell Y, it may be instructed which of {2^X - 1} CSI reporting sets/states/codepoints (e.g., having the lowest (or highest) index) to apply (and whether to report) and the instructions for the remaining CSI reporting sets/states/codepoints (indexes) may be omitted (i.e., it is assumed that there is no instruction for the remaining CSI reporting sets/states/codepoints), b) for the cell subgroup, the indicator field is configured with a smaller size of X-bit and PUSCH transmission is performed assuming that there is always no CSI reporting instruction for cell Y, c) for the corresponding cell subgroup, the indicator field may be configured with a larger size of Y-bit, and for cell X, a CSI reporting set/state/codepoint (index) may be indicated through a specific X-bit (for example, having the lowest (or highest) index) in the field (in this case, when a bit other than the specific X-bit is indicated as '1', PUSCH transmission may be performed assuming that there is no CSI reporting indication for the corresponding cell X, or it may be considered/assumed that there is no scheduling for the corresponding cell X), or d) for the corresponding cell subgroup, the indicator field may be configured with a larger size of Y-bit, and PUSCH transmission may be performed assuming that there is always no CSI reporting indication for cell X.
2. The cell subgroup may be considered/applied as a co-scheduled cell set (all cells belonging to the corresponding set).

F. Beta_offset indicator

i. Opt 1: Apply the shared-reference-cell method

1. A value (beta offset) indicated by the corresponding DCI field may be applied only to the PUSCH on a specific reference cell for which a dynamic beta offset indication is configured (from among cells scheduled via multi-cell DCI), and for the PUSCH on the remaining cells, a separately configured specific semi-static beta offset value or a specific beta offset value (e.g. having the lowest index) from among multiple candidate beta offsets (for which dynamic indication is possible) may be applied.

a. The PUSCH on the reference cell may be determined as (from among cells scheduled with the same multi-cell DCI) (Alt 1) the PUSCH on the cell with the lowest cell index, (Alt 2) the PUSCH having the earliest transmission starting symbol time (the PUSCH on the cell with the lowest cell index from among the multiple PUSCHs when there are multiple PUSCHs having the earliest starting symbol time), or (Alt 3) the PUSCH selected to multiplex HARQ-ACK.

ii. Opt 2: Apply the shared-single-cell method

1. Only when a single cell is scheduled (via multi-cell DCI) (or only when a single cell with dynamic beta offset indication set is scheduled), the corresponding DCI field may be configured (and the indicated value (beta offset) may be applied to PUSCH on the corresponding cell), and when a plurality of cells are scheduled (or a plurality of cells are scheduled or a single cell without dynamic beta offset indication set is scheduled), the corresponding DCI field may not be configured and may be omitted (in this case, an operation may be performed to apply a separately configured specific semi-static beta offset value or a specific (e.g., lowest index) beta offset value from among multiple candidate beta offsets (that may be dynamically indicated) to the PUSCH on the plurality of cells).

iii. Opt 3: Apply the shared-state-extension method

1. Each of the multiple states/codepoints to be indicated by the corresponding DCI field may be configured/set as a combination of multiple beta offset values for multiple PUSCHs on a plurality of cells (not a beta offset value for a PUSCH on a single cell), and accordingly, a specific combination of beta offset values (for multiple PUSCHs on a plurality of cells) may be indicated through the corresponding one field.

iv. Opt 4: Apply the separate method

1. A separate field may be configured for each cell scheduled through multi-cell DCI, and the size of the corresponding separate field may be variable depending on the number of scheduled cells (for example, a field size may be configured to be smaller when the number of scheduled cells exceeds N than when the number of scheduled cells is N (e.g. N = 1) or less).

A. In this case, for example, when the scheduled cells are N (e.g. N = 1) or less, the separate field per cell may be configured with K (e.g. K = 2) bits, and one of $2^K$ beta offset values (sets) may be indicated through the field, whereas when the scheduled cells exceed N, the separate field per cell may be configured with L (L < K, e.g. L = 1) bits, and one of $2^L$ beta offset values (sets) may be indicated through the corresponding field.

v. Opt 5: Apply the omit method

1. In the multi-cell DCI, the corresponding DCI field may not be configured and may be omitted (in this case, for the PUSCH on the cell scheduled through the multi-cell DCI, a separately configured specific semi-static beta offset value or a specific (e.g., lowest index) beta offset value from among multiple candidate beta offsets (that may be dynamically indicated) may be applied).

vi. Note 0: In this case, the specific reference cell may be determined as a specific cell from among the cells configured with a Beta offset indicator (within the existing single-cell (scheduling) DCI), and the separately configured specific semi-static beta offset value or a specific beta offset value (e.g. having the lowest index) from among multiple candidate beta offsets (in which dynamic indication is possible) is conveniently referred to as a specific default beta offset value.

vii. Note 1: In this case, for cell A configured with the Beta offset indicator and cell B that is not configured with FH flag/indicator (within the existing single-cell (scheduling) DCI), it may be configured/restricted such that only cells A or only cell B belong to the same cell subgroup (i.e., such that cell A and cell B do not belong together), and in this state, the shared-reference-cell or the shared-cell-common method may be separately applied to each cell subgroup.

viii. Note 2: As another method, cells A and B may be configured to belong to the same cell subgroup, and in this state, the shared-reference-cell or the shared-cell-common method may be applied separately to each cell subgroup.

1. When the shared-cell-common method is applied to a cell subgroup to which both cell A and cell B belong, a) the indicator field configuration may be omitted for the corresponding cell subgroup and the specific default beta offset value may always be applied, b) when the indicator field is configured for the corresponding cell subgroup and only bit '0' is indicated through the field, the specific default beta offset value may be applied for cell B and when (at least one) bit '1' is indicated, it may be considered/assumed that there is no scheduling for cell B, or c) when the indicator field is configured for the corresponding cell subgroup and the specific default beta offset value may always be applied for cell B.

2. The cell subgroup may be considered/applied as a co-scheduled cell set (all cells belonging to the corresponding set).

G. UL-SCH indicator

i. Opt 1: Apply the shared-reference-cell method

1. A value (whether UL-SCH is present or not) indicated by the DCI field may be applied only to the PUSCH on a specific reference cell (from among cells scheduled through multi-cell DCI), and assuming that UL-SCH transmission is indicated for the PUSCH on the remaining cells, the PUSCH may be transmitted.

a. The PUSCH on the reference cell may be determined as (from among cells scheduled with the same multi-cell DCI) (Alt 1) the PUSCH on the cell with the lowest (or highest) cell index, or (Alt 2) the PUSCH having the earliest (or latest) transmission starting symbol time (the PUSCH on the cell with the lowest (or highest) cell index from among the multiple PUSCHs when there are multiple PUSCHs having the earliest (or latest) starting symbol time).

ii. Opt 2: Apply the shared-single-cell method

1. Only when one cell is scheduled (via multi-cell DCI), the corresponding DCI field may be configured (a value (whether UL-SCH is present or not) indicated therethrough is applied to the PUSCH on the corresponding cell), and when a plurality of cells are scheduled, the corresponding DCI field may not be configured and may be omitted (in this case, the PUSCH is transmitted assuming that UL-SCH transmission is indicated for the PUSCH on the plurality of cells).

iii. Opt 3: Apply the omit method

1. The corresponding DCI field may not be configured in the multi-cell DCI and may be omitted (in this case, the PUSCH may be transmitted assuming that UL-SCH transmission is indicated for the PUSCH on the cell scheduled through the multi-cell DCI).

iv. Note A: In this case, the specific reference cell may be determined as one specific cell from among cells configured with the CSI request/indicator (within the existing single-cell (scheduling) DCI). For example, the reference cell may be determined as the smallest indexed cell with a CSI request/indicator set within a co-scheduled cell set.

H. ChannelAccess-CPext-CAPC (LBT)

i. Opt 1: Apply the shared-cell-common method

1. A value (LBT method and related parameters) indicated by the corresponding DCI field may be commonly applied to PUSCHs on all cells (operating in unlicensed bands) (scheduled via multi-cell DCI).

ii. Opt 2: Apply the shared-reference-cell method

1. A value (LBT method and related parameters) indicated by the corresponding DCI field may be applied only to the PUSCH on a specific reference cell (from among cells scheduled via multi-cell DCI), and for the PUSCH on the remaining cells, a combination of predefined/configured {LBT method (e.g. (random back-off based) Type-1 LBT), CP extension parameter, CAPC} values may be applied to transmit the PUSCH.

iii. Opt 3: Apply the shared-single-cell method

1. Only when one cell is scheduled (via multi-cell DCI), the corresponding DCI field may be configured (values indicated therethrough (LBT method and related parameters) are applied to the PUSCH on the corresponding cell), and when a plurality of cells are scheduled, the corresponding DCI field may not be configured and may be omitted (in this case, the PUSCH is transmitted by applying a combination of predefined/configured {LBT method (e.g. (random back-off based) Type-1 LBT), CP extension parameter, CAPC} values to the PUSCH on the plurality of cells).

iv. Opt 4: Apply the omit method

1. In the multi-cell DCI, the corresponding DCI field may not be configured and may be omitted (in this case, for the PUSCH on the cell scheduled through the multi-cell DCI, the PUSCH may be transmitted by applying a combination of predefined/configured {LBT method (e.g. (random back-off based) Type-1 LBT), CP extension parameter, CAPC} values).

v. Note 0: In this case, the specific reference cell may be determined as a specific one of the cells configured with the ChannelAccess-CPext-CAPC (LBT) indicator (within the existing single-cell (scheduling) DCI), and a combination of the specific (default) {LBT method, CP extension parameter, CAPC} values predefined/configured above may be designated as, for example, a combination of {LBT method, CP extension parameter, CAPC} configured in ChannelAccess-CPext-CAPC having a specific (e.g. highest or lowest) index (from among the ChannelAccess-CPext-CAPC (index) configured in the single-cell DCI).

vi. Note 1: In this case, (within the conventional single-cell (scheduling) DCI) the ChannelAccess-CPext-CAPC (LBT) indicator field may be configured such that cell X configured with a specific X-bit size and cell Y configured with a Y-bit size later than the X-bity belong to the same cell subgroup, and in this state, the shared-reference-cell or the shared-cell-common method may be separately applied to each cell subgroup.

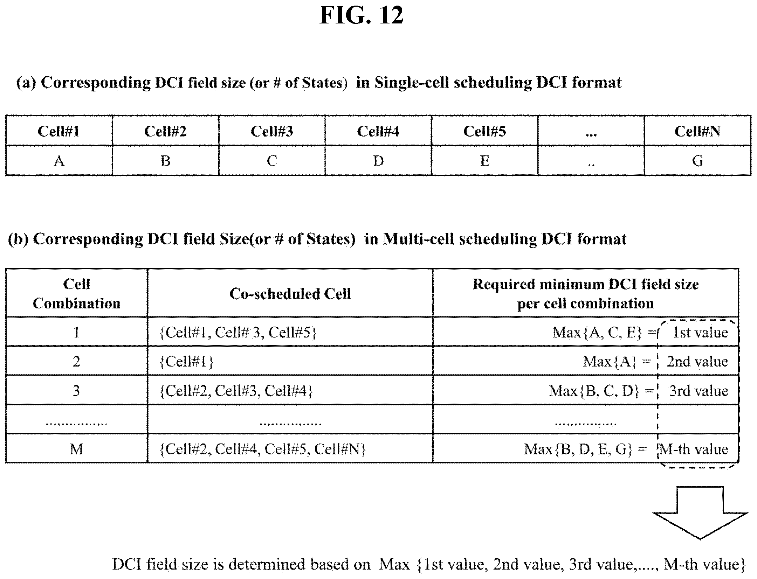

1. When the shared-cell-common method is applied to a cell subgroup to which cell X and cell Y belong together, a) for the corresponding cell subgroup, the indicator field may be configured with a smaller size of X-bit and for cell Y, it may be indicated which index from among 2^X ChannelAccess-CPext-CAPC (indexes) (for example, having the lowest (or highest) index) is to be applied, and indication for the remaining ChannelAccess-CPext-CAPC (index) is omitted (i.e., it is assumed that there is no indication for the remaining ChannelAccess-CPext-CAPC), b) for the cell subgroup, the indicator field may be configured with a smaller size of X-bit and for cell Y, the specific default ChannelAccess-CPext-CAPC may always be applied, c) for the cell subgroup, the indicator field may be configured with a larger size of Y-bit and for cell X, ChannelAccess-CPext-CAPC (index) may be indicated through a specific X-bit (for example, having the lowest (or highest) index) in the field (in this case, when any bit other than the specific X-bit is indicated as '1', the specific default ChannelAccess-CPext-CAPC may be applied to the cell X or it may be considered/assumed that there is no scheduling for the cell X), or d) for the cell subgroup, the indicator field may be configured with a larger size of Y-bit and the specific default ChannelAccess-CPext-CAPC may always be applied to cell X. For example, in FIG. 12, it is assumed that the DCI field is a ChannelAccess-CPext-CAPC field (or ChannelAccess-CPext field) and the Shared-cell-common method is applied to the ChannelAccess-CPext-CAPC field. In the Single Cell scheduling DCI of each cell, the size of the ChannelAccess-CPext-CAPC field may be configured independently, and for example, it may be assumed that the ChannelAccess-CPext-CAPC field has size A in Cell#1 (of its active BWP), size B in Cell#2 (of its active BWP), size C in Cell#3 (of its active BWP), size D in Cell#4 (of its active BWP), size E in Cell#5 (of its active BWP), and size G in Cell#N (of its active BWP). Sizes A to G may be different from each other or may be identical, and may include size 0. When the union of co-scheduled cell sets to be scheduled through multi-cell scheduling DCI includes all of Cell#1 to Cell#N, the size of the ChannelAccess-CPext-CAPC field in the multi-cell scheduling DCI may be Max {A, B, C, D, E,..., G}. When the union of co-scheduled cell sets to be scheduled through multi-cell scheduling DCI includes only some cells from among Cell#1 to Cell#N, the size of the ChannelAccess-CPext-CAPC field in the multi-cell scheduling DCI may be determined based on the cell with the largest ChannelAccess-CPext-CAPC field size in the union of co-scheduled cell sets. In other words, the size of the ChannelAccess-CPext-CAPC field in multi-cell scheduling DCI may be determined as Max {value 1, value 2, value 3,....., value M}. For example, in multi-cell scheduling DCI, when the size of the ChannelAccess-CPext-CAPC field is k bits and may indicate states/codepoints of 0 to $2^k$-1, and when there is no ChannelAccess-CPext-CAPC field configuration for states/codepoints corresponding to $2^k$-m to $2^k$-1 in a specific cell (of its active BWP) from among co-scheduled cells, the UE may apply a state/codepoint corresponding to 0 or $2^k$-m-1 for the specific cell (of its active BWP) like in method c), or apply a default ChannelAccess-CPext-CAPC for the specific cell (of its active BWP) like in method d).

2. The cell subgroup may be considered/applied as a co-scheduled cell set (all cells belonging to the corresponding set).

I. Open-loop power control (OLPC) parameter set indication

i. Opt 1: Apply the shared-reference-cell method

1. A value (OLPC parameter set index) indicated by the corresponding DCI field may be applied only to the PUSCH on a specific reference cell (from among cells scheduled via multi-cell DCI), and for the PUSCH on the remaining cells, a predefined/configured specific OLPC parameter set (index) may be applied to transmit the PUSCH.

ii. Opt 2: Apply the shared-single-cell method

1. Only when one cell is scheduled (via multi-cell DCI), the corresponding DCI field may be configured (a value (OLPC parameter set index) indicated therethrough is applied to the PUSCH on the corresponding cell), and when a plurality of cells are scheduled, the corresponding DCI field may not be configured and may be omitted (in this case, the PUSCH is transmitted by applying a specific OLPC parameter set (index) that is predefined/configured to the PUSCH on the plurality of cells).

iii. Opt 3: Apply the omit method

1. The corresponding DCI field may not be configured in the multi-cell DCI and may be omitted (in this case, the PUSCH may be transmitted by applying a specific OLPC parameter set (index) that is predefined/configured for the PUSCH on the cell scheduled through the multi-cell DCI).

iv. Note 0: In this case, the specific reference cell may be determined as a specific cell from among the cells for which an OLPC parameter set indicator is configured (within the existing single-cell (scheduling) DCI), and the specific (default) OLPC parameter set may be designated as, for example, the OLPC parameter set having the lowest index (from among the set OLPC parameter sets).

v. Note 1: In this case, for cell A configured with the OLPC parameter set indicator and cell B that is not configured with FH flag/indicator (within the existing single-cell (scheduling) DCI), it may be configured/restricted such that only cells A or only cell B belong to the same cell subgroup (i.e., such that cell A and cell B do not belong together), and in this state, the shared-reference-cell or the shared-cell-common method may be separately applied to each cell subgroup.

vi. Note 2: As another method, cells A and B may be configured to belong to the same cell subgroup, and in this state, the shared-reference-cell or the shared-cell-common method may be applied separately to each cell subgroup.

1. When the shared-cell-common method is applied to a cell subgroup to which both cell A and cell B belong, a) the indicator field configuration may be omitted for the corresponding cell subgroup and the default OLPC parameter set may always be applied, b) when the indicator field is configured for the corresponding cell subgroup and only bit '0' is indicated through the field, the specific default OLPC parameter set may be applied for cell B and when (at least one) bit '1' is indicated, it may be considered/assumed that there is no scheduling for cell B, or c) when the indicator field is configured for the corresponding cell subgroup and the specific default OLPC parameter set may always be applied for cell B.

2. The cell subgroup may be considered/applied as a co-scheduled cell set (all cells belonging to the corresponding set).

vii. Note 3: (Within the existing single-cell (scheduling) DCI) the OLPC parameter set indicator field may be configured such that cell X configured with a specific X (e.g. 1-bit) and cell Y configured with a larger Y (e.g. 2-bit) belong to the same cell subgroup, and in this state, the shared-reference-cell or the shared-cell-common method may be separately applied to each cell subgroup.

1. When the shared-cell-common method is applied to a cell subgroup to which cell X and cell Y belong together, a) for the cell subgroup, the indicator field may be configured with a smaller size X (e.g. 1-bit) and for cell Y, it indicates which of two OLPC parameter sets (e.g., having the lowest index and the second lowest index) to apply, and the indication for the remaining OLPC parameter set (index) is omitted (i.e., it is assumed that there is no indication for the remaining OLPC parameter set), b) for the cell subgroup, the indicator field may be configured with a smaller size X (e.g. 1-bit) and for cell Y, the specific default OLPC parameter set is always applied, c) for the cell subgroup, the indicator field may be configured with a larger size Y (e.g. 2-bit) and for cell X, the OLPC parameter set (index) may be indicated via a specific 1-bit (e.g., MSB or LSB) in the field (in this case, when the specific any bit other than 1-bit is indicated as '1', the specific default OLPC parameter set may be applied for the corresponding cell X, or it may be considered/assumed that there is no scheduling for the corresponding cell X), or d) the indicator field may be configured with a larger size Y (e.g. 2-bit) for the corresponding cell subgroup and the specific default OLPC parameter set may always be applied for the cell X. For example, in FIG. 12, it is assumed that the DCI field is an OLPC parameter set indicator field for open-loop power control, and that the shared-cell-common method is applied to the OLPC parameter set indicator field. In the Single Cell scheduling DCI of each cell, the size of the OLPC parameter set indicator field may be configured independently, and for example, it may be assumed that the OLPC parameter set indicator field has size A in Cell#1 (of its active BWP), size B in Cell#2 (of its active BWP), size C in Cell#3 (of its active BWP), size D in Cell#4 (of its active BWP), size E in Cell#5 (of its active BWP), and size G in Cell#N (of its active BWP). Sizes A to G may be different from each other or may be identical, and may include size 0. When the union of co-scheduled cell sets to be scheduled through multi-cell scheduling DCI includes all of Cell#1 to Cell#N, the size of the OLPC parameter set indicator field in the multi-cell scheduling DCI may be Max {A, B, C, D, E,..., G}. When the union of co-scheduled cell sets to be scheduled through multi-cell scheduling DCI includes only some cells from among Cell#1 to Cell#N, the size of the OLPC parameter set indicator field in the multi-cell scheduling DCI may be determined based on the cell with the largest OLPC parameter set indicator field size in the union of co-scheduled cell sets. In other words, the size of the OLPC parameter set indicator field in multi-cell scheduling DCI may be determined as Max {value 1, value 2, value 3,....., value M}. For example, in multi-cell scheduling DCI, when the size of the OLPC parameter set indicator field is k bits and may indicate states/codepoints of 0 to $2^k$-1, and when there is no OLPC parameter set indicator field configuration for states/codepoints corresponding to $2^k$-m to $2^k$-1 in a specific cell (of its active BWP) from among co-scheduled cells, the UE may apply a state/codepoint corresponding to 0 or $2^k$-m-1 for the specific cell (of its active BWP) like in method c), or apply a default OLPC parameter set indicator for the specific cell (of its active BWP) like in method d).

2. The cell subgroup may be considered/applied as a co-scheduled cell set (all cells belonging to the corresponding set).

J. Priority indicator (PI)

i. Opt 1: Apply the shared-cell-common method

1. A value (LP or HP) indicated by the corresponding DCI field may be commonly applied to the PUSCH on all cells (scheduled through multi-cell DCI), and all of the cells may be all cells configured with PI (from among the cells scheduled through multi-cell DCI).

a. When HP is indicated through the field in the multi-cell DCI, for PUSCH on a cell for which PI is not configured (from among cells scheduled through the corresponding DCI), (Alt 1) a PUSCH may be transmitted assuming that there is no PI indication (or that LP is indicated), or (Alt 2) PUSCH transmission on the cell may be omitted (dropped) assuming that there is no PUSCH scheduling for the corresponding cell (for which PI is not configured).
b. When LP is indicated through the field in the multi-cell DCI, the Alt 1 operation may be applied to the PUSCH on the cell for which PI is not configured (from among the cells scheduled through the DCI).

ii. Opt 2: Apply the shared-reference-cell method

1. A value indicated by the DCI field (LP or HP) may be applied only to the PUSCH on a specific reference cell (from among cells scheduled through multi-cell DCI) configured with PI, and the Alt 1 and/or Alt 2 operations may be applied to the PUSCH on the remaining cells.

iii. Opt 3: Apply the shared-single-cell method

1. The corresponding DCI field may be configured only when one cell is scheduled (via multi-cell DCI) (or only when one cell configured with PI is scheduled) (and a value indicated thereby (LP or HP) may be applied to the PUSCH on the corresponding cell), and when a plurality of cells are scheduled (or when the plurality of cells are scheduled or one cell configured without PI is scheduled), the corresponding DCI field may not be configured and may be omitted (in this case, the Alt 1 operation is applied).

iv. Opt 4: Apply the omit method

1. The corresponding DCI field may not be configured within the multi-cell DCI and may be omitted (in which case the Alt 1 operation is applied).

v. Note 0: In this case, the specific reference cell may be determined as one specific cell from among cells configured with the priority indicator (within the existing single-cell (scheduling) DCI).

vi. Note 1: In this case, for cell A configured with the priority indicator and cell B that is not configured with FH flag/indicator (within the existing single-cell (scheduling) DCI), it may be configured/restricted such that only cells A or only cell B belong to the same cell subgroup (i.e., such that cell A and cell B do not belong together), and in this state, the shared-reference-cell or the shared-cell-common method may be separately applied to each cell subgroup. For example, when all cells belonging to a co-scheduled cell set indicated by multi-cell DCI are cell A configured with a priority indicator, the priority (e.g. HP or LP) indicated through the priority indicator field in the DCI may be assumed/applied equally to PDSCHs/PUSCHs on all cells belonging to the co-scheduled cell set.

vii. Note 2: As another method, cells A and B may be configured to belong to the same cell subgroup, and in this state, the shared-reference-cell or the shared-cell-common method may be applied separately to each cell subgroup.

1. When the shared-cell-common method is applied to a cell subgroup to which cell A and cell B belong together, a) the indicator field configuration may be omitted for the cell subgroup and may always be considered/assumed to be indicated as LP. For example, when at least one cell from among the cells belonging to a co-scheduled cell set scheduled/indicated by multi-cell DCI is cell A configured with a priority indicator (PI) (in the case of single-cell DCI) and at least one cell is cell B configured without PI (in the case of single-cell DCI), the UE/BS may operate to assume/apply the same one priority (e.g., LP) to DL/UL signal scheduling (e.g., PDSCH/PUSCHs) of all cells belonging to the co-scheduled cell set (e.g., assuming that a specific priority (e.g., LP) is indicated via a PI field in the multi-cell DCI). The PI field configuration/indication itself may be omitted within the multi-cell DCI, or the PI field may still be configured/indicated within the multi-cell DCI, but the UE/BS may ignore the PI field. Alternatively, when the shared-cell-common method is applied to a cell subgroup to which cell A and cell B belong together, b) the indicator field is configured for the corresponding cell subgroup and HP is indicated through the field, and the cells may operate assuming that there is no scheduling for cell B, or c) the indicator field is configured for the corresponding cell subgroup and the cells may operate assuming that LP is always indicated for cell B.

2. The cell subgroup may be considered/applied as a co-scheduled cell set (all cells belonging to the corresponding set).

K. Invalid symbol pattern indicator

i. Opt 1: Apply the shared-reference-cell method

1. A value indicated by the DCI field (invalid symbol pattern) may be applied only to the PUSCH on a specific reference cell (from among cells scheduled through multi-cell DCI) configured with invalid symbol pattern, and assuming that there is no invalid symbol pattern indication for the PUSCH on the remaining cells, the PUSCH may be transmitted.

ii. Opt 2: Apply the shared-single-cell method

1. The corresponding DCI field may be configured only when one cell is scheduled (via multi-cell DCI) (or only when one cell configured with an invalid symbol pattern is scheduled) (and a value indicated thereby (whether the invalid symbol pattern is applied or not) may be applied to the PUSCH on the corresponding cell), and when a plurality of cells are scheduled (or when a plurality of cells are scheduled or one cell configured without the invalid symbol pattern is scheduled), the corresponding DCI field may not be configured and may be omitted (in this case, assuming that there is no invalid symbol pattern indication for the PUSCH on the plurality of cells, the PUSCH is transmitted.

iii. Opt 3: Apply the omit method

1. The corresponding DCI field may not be configured in the multi-cell DCI and may be omitted (in this case, the PUSCH may be transmitted assuming that there is no invalid symbol pattern indication for the PUSCH on the cell scheduled through the multi-cell DCI).

iv. Opt 4: Apply the separate method

1. A separate field may be configured for each cell scheduled through multi-cell DCI, and the size of the separate field may be variable depending on the number of scheduled cells (for example, the field size may be configured to be smaller when the number of scheduled cells exceeds N than when the number of scheduled cells is N (e.g. N = 1) or less).

a. In this case, for example, when the scheduled cells are N (e.g. N = 1) or less, a separate field for each cell may be configured with K bits, and one of $2^K$ invalid symbol patterns may be indicated through the field, whereas when the scheduled cells exceed N, the separate field for each cell may be configured with L (L < K) bits, and one of $2^L$ invalid symbol patterns may be indicated through the field.

v. Opt 5: Apply the shared-state-extension method

1. Each of the multiple states/codepoints to be indicated by the corresponding DCI field may be configured/set as a combination of multiple invalid symbol patterns for multiple PUSCHs on a plurality of cells (not an invalid symbol pattern for a PUSCH on a single cell), and accordingly, a specific combination of invalid symbol patterns (for multiple PUSCHs on a plurality of cells) may be indicated through the corresponding one field.

vi. Note 0: In this case, the specific reference cell may be determined as one specific cell from among cells configured with the Invalid symbol pattern indicator (within the existing single-cell (scheduling) DCI).
vii. Note 1: In this case, for cell A configured with the invalid symbol pattern indicator and cell B that is not configured with FH flag/indicator (within the existing single-cell (scheduling) DCI), it may be configured/restricted such that only cells A or only cell B belong to the same cell subgroup (i.e., such that cell A and cell B do not belong together), and in this state, the shared-reference-cell or the shared-cell-common method may be separately applied to each cell subgroup.
viii. Note 2: As another method, cells A and B may be configured to belong to the same cell subgroup, and in this state, the shared-reference-cell or the shared-cell-common method may be applied separately to each cell subgroup.

1. When the shared-cell-common method is applied to a cell subgroup to which cell A and cell B belong above, a) assuming that the indicator field configuration is omitted and there is always no invalid symbol pattern indication for the cell subgroup, the PUSCH may be transmitted, b) considering/assuming that there is no scheduling for cell B when the indicator field is configured for the cell subgroup and bit '1' is indicated through the corresponding field, or c) assuming that the indicator field is configured for the cell subgroup and there is always no invalid symbol pattern indication for cell B, the PUSCH may be transmitted.
2. The cell subgroup may be considered/applied as a co-scheduled cell set (all cells belonging to the corresponding set).

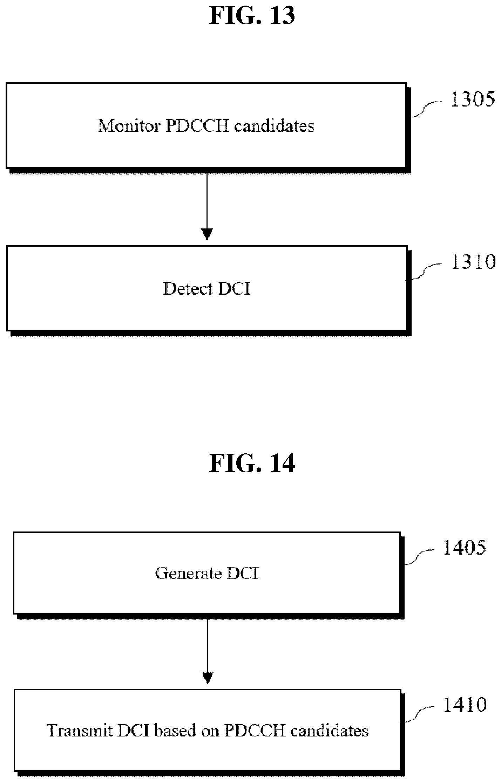

FIG. 13 shows an example implementation of signal reception by a UE based on at least some of the embodiments described above. Even without separate explanation, the previously explained contents may be referenced to help understand FIG. 13.
The UE monitors physical downlink control channel (PDCCH) candidates (1305).
The UE may detect downlink control channel (DCI) through monitoring of the PDCCH candidates (1310).
The DCI may support multi-cell scheduling based on a plurality of cells configured in the UE. The DCI may include a first DCI field commonly configured for co-scheduled cells. Based on that the plurality of serving cells include a first cell and a second cell, and that a size related configuration of the first DCI field is M-bit for scheduling of the first cell and is N-bit for scheduling of the second cell, respectively: the size of the first DCI field commonly configured for the co-scheduled cells may be determined as a lager one of the M-bit and the N-bit.
The first DCI field may include at least one of a field regarding antenna port information, a field regarding sounding reference signal (SRS) resource information, a field regarding information about precoding and number of layers, a field regarding beta offset information, an open-loop power control parameter set indication (OLPC) field, and a field regarding channel access and cyclic prefix (CP) information.
The first DCI field may indicate one code point common to the co-scheduled cells. A parameter mapped to the indicated one code point may be separately configured for each of the co-scheduled cells. A table providing parameters mapped to respective scheduled cells for each code point of the first DCI field may be configured in the UE.

The size of the first DCI field may be determined based on a cell having a maximum size related configuration of the first DCI field from among the plurality of cells.

The DCI may include a second DCI field applied for a reference cell from among the co-scheduled cells.

The reference cell may be a cell having the smallest serving cell index from among the co-scheduled cells.

The second DCI field may include a channel state information (CSI) request field.

The UE may obtain CSI related to the CSI request field based on channel state information-reference signal (CSI-RS) information for the reference cell having the smallest serving cell index from among the co-scheduled cells.

The UE may transmit a CSI report related to the CSI request field through a physical uplink shared channel (PUSCH) on the reference cell having the smallest serving cell index from among the co-scheduled cells.

FIG. 14 shows an example implementation of signal transmission by a BS based on at least some of the embodiments described above. Even without separate explanation, the previously explained contents may be referenced to help understand FIG. 14.

The BS generates downlink control information (DCI) (1405). The DCI may support multi-cell scheduling based on a plurality of cells configured in the UE. The DCI may include a first DCI field that is commonly configured for co-scheduled cells. Based on that the plurality of cells including a first cell and a second cell and that a size related configuration of the first DCI field is M-bit for scheduling of the first cell and N-bit for scheduling of the second cell, the size of the first DCI field commonly configured for the co-scheduled cells may be determined through a larger one of the M-bit and the N-bit.

The BS may transmit the DCI to the UE based on at least one of the physical downlink control channel (PDCCH) candidates of the UE (1410).

The first DCI field may include at least one of a field regarding antenna port information, a field regarding sounding reference signal (SRS) resource information, a field regarding information about precoding and number of layers, a field regarding beta offset information, an open-loop power control parameter set indication (OLPC) field, and a field regarding channel access and cyclic prefix (CP) information.

The first DCI field may indicate one code point common to the co-scheduled cells. A parameter mapped to the indicated one code point may be separately configured for each of the co-scheduled cells. The BS may configure a table providing parameters mapped to respective scheduled cells for each code point of the first DCI field in the UE.

The size of the first DCI field may be determined based on a cell having a maximum size related configuration of the first DCI field from among the plurality of cells.

The DCI may include a second DCI field applied for a reference cell from among the co-scheduled cells.

The reference cell may be a cell having the smallest serving cell index from among the co-scheduled cells.

The second DCI field may include a channel state information (CSI) request field.

The CSI related to the CSI request field may be determined based on channel state information-reference signal (CSI-RS) information for the reference cell having the smallest serving cell index from among the co-scheduled cells.

The BS may receive a CSI report related to the CSI request field through a physical uplink shared channel (PUSCH) on the reference cell having the smallest serving cell index from among the co-scheduled cells.

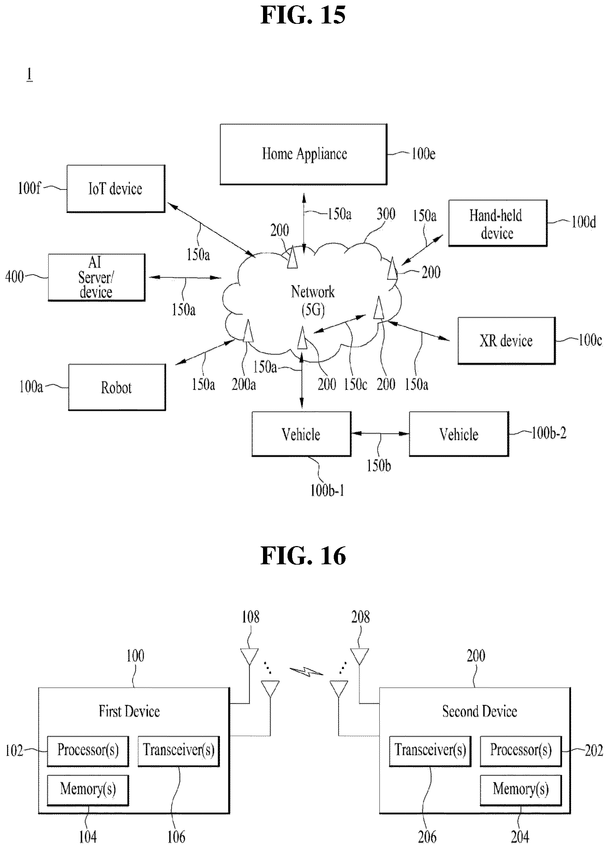

FIG. 15 illustrates a communication system 1 applied to the present disclosure.

Referring to FIG. 15, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 16 illustrates wireless devices applicable to the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

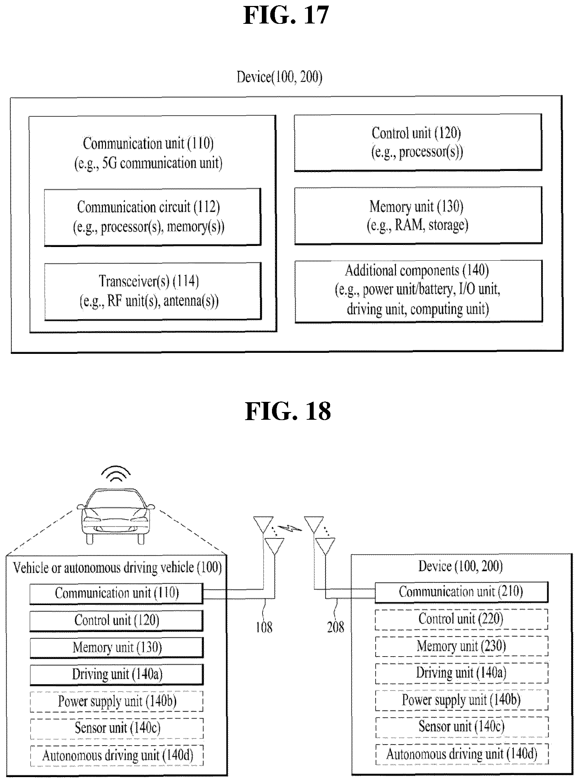

FIG. 17 illustrates another example of a wireless device applied to the present disclosure. The wireless device may be implemented in various forms according to a use-case/service (refer to FIG. 15).

Referring to FIG. 17, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 17, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 18 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 18, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 17, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

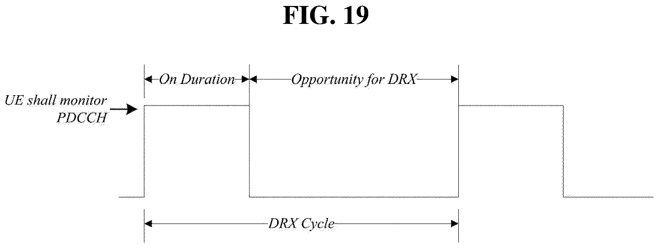

FIG. 19 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 19, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the present disclosure. Irrespective of whether DRX is configured, PDCCH monitoring may be restricted during a time period configured as a measurement gap.

Table 9 describes a DRX operation of a UE (in the RRC_CONNECTED state). Referring to Table 9, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the aforedescribed/proposed procedures and/or methods, as illustrated in FIG. 5.

[Table 9]

|  | | Type of signals | UE procedure |
|---|---|---|---|
|  | 1st step | RRC signalling(MAC-Cell GroupConfig) | - Receive DRX configuration information |
|  | 2nd Step | MAC CE((Long) DRX command MAC CE) | - Receive DRX command |
|  | 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.

-    Value of drx-OnDurationTimer: defines the duration of the starting period of the DRX cycle
-    Value of drx-InactivityTimer: defines the duration of a time period during which the UE is awake after a PDCCH occasion in which a PDCCH indicating initial UL or DL data has been detected
-    Value of drx-HARQ-RTT-TimerDL: defines the duration of a maximum time period until a DL retransmission is received after reception of a DL initial transmission
-    Value of drx-HARQ-RTT-TimerDL: defines the duration of a maximum time period until a grant for a UL retransmission is received after reception of a grant for a UL initial transmission
-    drx-LongCycleStartOffset: defines the duration and starting time of a DRX cycle
-    drx-ShortCycle (optional): defines the duration of a short DRX cycle

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

The above-described embodiments correspond to combinations of elements and features of the present disclosure in prescribed forms. And, the respective elements or features may be considered as selective unless they are explicitly mentioned. Each of the elements or features may be implemented in a form failing to be combined with other elements or features. Moreover, it is able to implement an embodiment of the present disclosure by combining elements and/or features together in part. A sequence of operations explained for each embodiment of the present disclosure may be modified. Some configurations or features of one embodiment may be included in another embodiment or may be substituted for corresponding configurations or features of another embodiment. And, it is apparently understandable that an embodiment is configured by combining claims failing to have relation of explicit citation in the appended claims together or may be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

INDUSTRIAL APPLICABILITY

The present disclosure is applicable to UEs, BSs, or other apparatuses in a wireless mobile communication system.

**Claims**

1. A method of receiving a signal in a user equipment (UE) in a wireless communication system, the method comprising:

   monitoring physical downlink control channel (PDCCH) candidates; and
   detecting downlink control information (DCI) through the monitoring of the PDCCH candidates,
   wherein the DCI supports multi-cell scheduling based on a plurality of cells configured in the UE,
   wherein the DCI includes a first DCI field that is commonly configured for co-scheduled cells, and
   wherein, based on that the plurality of cells include a first cell and a second cell, and that a size related configuration of the first DCI field is M-bit for scheduling of the first cell and is N-bit for scheduling of the second cell, respectively:
   a size of the first DCI field commonly configured for the co-scheduled cells is determined based on a lager one of the M-bit and the N-bit.

2. The method of claim 1, wherein the first DCI field includes at least one of a field regarding antenna port information, a field regarding sounding reference signal (SRS) resource information, a field regarding information about precoding and number of layers, a field regarding beta offset information, an open-loop power control parameter set indication (OLPC) field, and a field regarding channel access and cyclic prefix (CP) information.

3. The method of claim 1, wherein the first DCI field indicates one code point common to the co-scheduled cells, and a parameter mapped to the indicated one code point is separately configured for each of the co-scheduled cells.

4. The method of claim 3, wherein a table providing parameters mapped to respective scheduled cells for each code point of the first DCI field is configured in the UE.

5. The method of claim 1, wherein the size of the first DCI field is determined based on a cell having a maximum size related configuration of the first DCI field from among the plurality of cells.

6. The method of claim 1, wherein the DCI includes a second DCI field applied for a reference cell from among the co-scheduled cells, and
   wherein the reference cell is a cell having a smallest serving cell index from among the co-scheduled cells.

7. The method of claim 6, wherein the second DCI field includes a channel state information (CSI) request field.

8. The method of claim 7, wherein the UE obtains CSI related to the CSI request field based on channel state information-reference signal (CSI-RS) information for the reference cell having the smallest serving cell index from among the co-scheduled cells.

9. The method of claim 7, wherein the UE transmits a CSI report related to the CSI request field through a physical uplink shared channel (PUSCH) on the reference cell having the smallest serving cell index from among the co-scheduled cells.

10. A computer-readable recording medium having recorded thereon a program for performing the method of claim 1.

11. A device for wireless communication, the device comprising:

    a memory configured to store instructions; and
    a processor configured to perform operations by executing the instructions,
    wherein the operations of the processor include monitoring physical downlink control channel (PDCCH) candidates and detecting downlink control information (DCI) through the monitoring of the PDCCH candidates,

wherein the DCI supports multi-cell scheduling based on a plurality of cells configured in the device,
wherein the DCI includes a first DCI field that is commonly configured for co-scheduled cells, and
wherein, based on that the plurality of cells include a first cell and a second cell, and that a size related configuration of the first DCI field is M-bit for scheduling of the first cell and is N-bit for scheduling of the second cell, respectively:
a size of the first DCI field commonly configured for the co-scheduled cells is determined based on a lager one of the M-bit and the N-bit.

12. The device of claim 11, further comprising:

a transceiver configured to transmit or receive a wireless signal under control of the processor,
wherein the device includes a user equipment (UE) in a wireless communication system.

13. The device of claim 11, wherein the device includes an application specific integrated circuit (ASIC) or a digital signal processing device, for controlling the UE.

14. A method of transmitting a signal by a base station (BS) in a wireless communication system, the method comprising:

generating downlink control information (DCI); and
transmitting the DCI based on at least one of physical downlink control channel (PDCCH) candidates of a user equipment (UE), to the UE,
wherein the DCI supports multi-cell scheduling based on a plurality of cells configured in the UE,
wherein the DCI includes a first DCI field that is commonly configured for co-scheduled cells, and
wherein, based on that the plurality of cells include a first cell and a second cell, and that a size related configuration of the first DCI field is M-bit for scheduling of the first cell and is N-bit for scheduling of the second cell, respectively:
a size of the first DCI field commonly configured for the co-scheduled cells is determined based on a lager one of the M-bit and the N-bit.

15. A base station (BS) for transmitting a signal in a wireless communication system, the BS comprising:

a transceiver; and
a processor configured to generate downlink control information (DCI) and transmit the DCI through the transceiver based on at least one of physical downlink control channel (PDCCH) candidates of a user equipment (UE), to the UE,
wherein the DCI includes a first DCI field that is commonly configured for co-scheduled cells, and
wherein, based on that the plurality of cells include a first cell and a second cell, and that a size related configuration of the first DCI field is M-bit for scheduling of the first cell and is N-bit for scheduling of the second cell, respectively:
a size of the first DCI field commonly configured for the co-scheduled cells is determined based on a larger one of the M-bit and the N-bit.

# FIG. 1

Initial Cell Search — System Information Reception — Random Access Procedure — General DL/UL Tx/Rx — S108

PSS/SSS & [DLRS] & PBCH — S101

PDCCH/ PDSCH (BCCH) — S102

PRACH — S103 | PDCCH/ PDSCH — S104 | PRACH — S105 | PDCCH/ PDSCH — S106

PDCCH/ PDSCH — S107 | PUSCH/ PUCCH

• DL/UL ACK/NACK
• UE CQI/PMI/Rank Report using PUSCH and PUCCH

# FIG. 2

One Frame (10ms)

Half-Frame (5ms) | Half-Frame (5ms)

Subframe 0 (1ms) | Subframe 4 (1ms) | Subframe 5 (1ms) | Subframe 9 (1ms)

Subframe (1ms)

15KHz | Slot (14 symbols) | 1ms

30KHz | Slot 0 (14 symbols) | Slot 1 | 500us

60KHz | Slot 0 (14 symbols) | Slot 1 | Slot 2 | Slot 3 | 250us

120KHz | Slot 0 (14 symbols) | Slot 1 | Slot 2 | Slot 3 | Slot 4 | Slot 5 | Slot 6 | Slot 7 | 125us

# FIG. 3

# FIG. 4

## FIG. 5

DL assingment-to-PDSCH offset (K0)

PDCCH

slot

PDSCH

PUCCH

PDSCH-to-HARQ-ACK reporting offset (K1)

## FIG. 6

UL grant-to-PUSCH offset (K2)

PDCCH

PUSCH

## FIG. 7

Cell A
(Scheduling Cell)

CIF

Cell B
(Scheduled Cell)

CIF

Cell C
(Scheduled Cell)

CIF

Slot #n          Slot #n+1          Slot #n+2

CORESET
(or Search Space Set)

PDCCH

PDSCH or PUSCH

Freq.

Time

# FIG. 8

(a) Carrier aggregation between L-band and U-band

(b) standalone U-band(s)

# FIG. 9

# FIG. 10

Table

| DCI field state (codepoint) |
|---|
| 1st state (e.g., 00) |
| 2nd state(e.g., 01) |
| ... |
| i-th state |

| (potential) co-scheduled cell set | | | |
|---|---|---|---|
| Cell#1 | Cell#2 | ....... | Cell#N |
| value a | value b | ....... | value c |
| value h | value k | ....... | value a |
| ....... | ....... | ....... | ....... |
| N/A | value x | | N/A |

EP 4 518 225 A1

# FIG. 11

CSI request field
applied to a scheduled cell with
the smallest cell index
among co-scheduled cell(s)

| Cell Combinations | (potential) co-scheduled cell set | | | |
|---|---|---|---|---|
| | **Cell#1** | **Cell#2** | **.......** | **Cell#N** |
| case 1 | Scheduled | Scheduled | ....... | Scheduled |
| case 2 | Not scheduled | Scheduled | ....... | Scheduled |
| ...... | | ....... | ....... | ....... |
| case x | Not scheduled | Not scheduled | | Scheduled |

EP 4 518 225 A1

# FIG. 12

**(a) Corresponding DCI field size (or # of States)  in Single-cell scheduling DCI format**

| Cell#1 | Cell#2 | Cell#3 | Cell#4 | Cell#5 | ... | Cell#N |
|--------|--------|--------|--------|--------|-----|--------|
| A | B | C | D | E | .. | G |

**(b) Corresponding DCI field Size(or # of States)  in Multi-cell scheduling DCI format**

| Cell Combination | Co-scheduled Cell | Required minimum DCI field size per cell combination | |
|------------------|-------------------|------------------------------------------------------|---|
| 1 | {Cell#1, Cell# 3, Cell#5} | Max{A, C, E} = | 1st value |
| 2 | {Cell#1} | Max{A} = | 2nd value |
| 3 | {Cell#2, Cell#3, Cell#4} | Max{B, C, D} = | 3rd value |
| ............... | ............... | ............... | |
| M | {Cell#2, Cell#4, Cell#5, Cell#N} | Max{B, D, E, G} = | M-th value |

DCI field size is determined based on  Max {1st value, 2nd value, 3rd value,...., M-th value}

EP 4 518 225 A1

## FIG. 13

Monitor PDCCH candidates — 1305

Detect DCI — 1310

## FIG. 14

Generate DCI — 1405

Transmit DCI based on PDCCH candidates — 1410

# FIG. 15

1

# FIG. 16

# FIG. 17

Device(100, 200)

| | |
|---|---|
| Communication unit (110)<br>(e.g., 5G communication unit) | Control unit (120)<br>(e.g., processor(s)) |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 18

**Vehicle or autonomous driving vehicle (100)**
- Communication unit (110)
- Control unit (120)
- Memory unit (130)
- Driving unit (140a)
- Power supply unit (140b)
- Sensor unit (140c)
- Autonomous driving unit (140d)

108    208

**Device (100, 200)**
- Communication unit (210)
- Control unit (220)
- Memory unit (230)
- Driving unit (140a)
- Power supply unit (140b)
- Sensor unit (140c)
- Autonomous driving unit (140d)

# FIG. 19

## INTERNATIONAL SEARCH REPORT

International application No.

**PCT/KR2023/005768**

| A. | CLASSIFICATION OF SUBJECT MATTER |
|---|---|

**H04L 5/00**(2006.01)i; **H04W 72/232**(2023.01)i; **H04W 72/23**(2023.01)i; **H04W 72/12**(2009.01)i; **H04L 1/00**(2006.01)i

According to International Patent Classification (IPC) or to both national classification and IPC

| B. | FIELDS SEARCHED |
|---|---|

Minimum documentation searched (classification system followed by classification symbols)

H04L 5/00(2006.01); H04B 7/26(2006.01); H04J 11/00(2006.01); H04L 1/00(2006.01); H04L 1/18(2006.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 함께 스케줄된(co-scheduled), 셀들(cells), PDCCH(physical downlink control channel), 모니터링(monitoring), DCI 필드(downlink control information field)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2021-150644 A1 (QUALCOMM INCORPORATED) 29 July 2021 (2021-07-29) See paragraphs [0074]-[0075]; claims 14, 60 and 62; and figure 5. | 1-5,10-15 |
| A | | 6-9 |
| Y | US 2020-0128565 A1 (PANASONIC INTELLECTUAL PROPERTY CORPORATION OF AMERICA) 23 April 2020 (2020-04-23) See paragraphs [0152] and [0185]; claim 1; and figure 8. | 1-5,10-15 |
| A | KR 10-1769371 B1 (LG ELECTRONICS INC.) 30 August 2017 (2017-08-30) See paragraphs [0238]-[0243]; claim 1; and figure 9. | 1-15 |
| A | KR 10-2018-0046445 A (KT CORPORATION) 09 May 2018 (2018-05-09) See paragraphs [0219]-[0224]; claim 1; and figure 6. | 1-15 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 August 2023** | **02 August 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/005768**

**C.      DOCUMENTS CONSIDERED TO BE RELEVANT**

| Category* | Citation of document, with indication, where appropriate, of the relevant passages | Relevant to claim No. |
|---|---|---|
| A | KR 10-2015-0004386 A (CHINA ACADEMY OF TELECOMMUNICATIONS TECHNOLOGY) 12 January 2015 (2015-01-12)<br>      See paragraphs [0031]-[0046]; claim 1; and figure 7. | 1-15 |

Form PCT/ISA/210 (second sheet) (July 2022)

International application No.

**PCT/KR2023/005768**

| Patent document cited in search report | | | Publication date (day/month/year) | Patent family member(s) | | | Publication date (day/month/year) |
|---|---|---|---|---|---|---|---|
| WO | 2021-150644 | A1 | 29 July 2021 | BR | 112022013817 | A2 | 13 September 2022 |
| | | | | CN | 115104279 | A | 23 September 2022 |
| | | | | EP | 4094397 | A1 | 30 November 2022 |
| | | | | KR | 10-2022-0127259 | A | 19 September 2022 |
| | | | | TW | 202135575 | A | 16 September 2021 |
| | | | | US | 2021-0227563 | A1 | 22 July 2021 |
| US | 2020-0128565 | A1 | 23 April 2020 | EP | 3128801 | A1 | 08 February 2017 |
| | | | | EP | 3128801 | B1 | 02 October 2019 |
| | | | | EP | 3547596 | A1 | 02 October 2019 |
| | | | | EP | 3547596 | B1 | 29 September 2021 |
| | | | | EP | 3896893 | A1 | 20 October 2021 |
| | | | | JP | 2018-522452 | A | 09 August 2018 |
| | | | | JP | 6704417 | B2 | 03 June 2020 |
| | | | | US | 10555329 | B2 | 04 February 2020 |
| | | | | US | 11368967 | B2 | 21 June 2022 |
| | | | | US | 2018-0152954 | A1 | 31 May 2018 |
| | | | | WO | 2017-026086 | A1 | 16 February 2017 |
| KR | 10-1769371 | B1 | 30 August 2017 | CN | 102714567 | A | 03 October 2012 |
| | | | | CN | 102714567 | B | 22 April 2015 |
| | | | | EP | 2525513 | A2 | 21 November 2012 |
| | | | | EP | 2525513 | A4 | 08 June 2016 |
| | | | | EP | 2525513 | B1 | 31 May 2017 |
| | | | | KR | 10-2011-0082485 | A | 19 July 2011 |
| | | | | US | 2013-0010714 | A1 | 10 January 2013 |
| | | | | US | 9031016 | B2 | 12 May 2015 |
| | | | | WO | 2011-084026 | A2 | 14 July 2011 |
| | | | | WO | 2011-084026 | A3 | 01 December 2011 |
| KR | 10-2018-0046445 | A | 09 May 2018 | | None | | |
| KR | 10-2015-0004386 | A | 12 January 2015 | CN | 102665230 | A | 12 September 2012 |
| | | | | CN | 102665230 | B | 09 July 2014 |
| | | | | EP | 2843986 | A1 | 04 March 2015 |
| | | | | EP | 2843986 | A4 | 10 June 2015 |
| | | | | EP | 2843986 | B1 | 28 November 2018 |
| | | | | JP | 2015-520549 | A | 16 July 2015 |
| | | | | JP | 6105716 | B2 | 29 March 2017 |
| | | | | KR | 10-1663149 | B1 | 06 October 2016 |
| | | | | US | 2015-0092695 | A1 | 02 April 2015 |
| | | | | US | 9661622 | B2 | 23 May 2017 |
| | | | | WO | 2013-159676 | A1 | 31 October 2013 |

Form PCT/ISA/210 (patent family annex) (July 2022)